# FASCICULE DE BREVET EUROPEEN

(11) **EP 3 841 147 B1**
(45) Date de publication et mention de la délivrance du brevet: **04.10.2023**
(21) Numéro de dépôt: 19780287.9
(22) Date de dépôt: 20.08.2019
(51) Int. Cl.: C08G 65/34, C08G 65/40, C08G 75/23

(54) **POLYÉTHERS AROMATIQUES À BASE D'UN DIOL BIOSOURCÉ FURANIQUE**
AROMATISCHE POLYETHER MIT EINEM FURANDIOL AUS BIOLOGISCHER QUELLE
AROMATIC POLYETHERS CONTAINING A BIOSOURCED FURAN DIOL

(30) Priorité: 20.08.2018 FR 1857546
(43) Date de publication de la demande: 30.06.2021
(73) Titulaire: ROQUETTE FRERES, 62136 Lestrem (FR); Université Claude Bernard Lyon 1 (UCBL), 69622 Villeurbanne Cedex (FR); Centre National de la Recherche Scientifique (CNRS), 75016 Paris (FR)
(72) Inventeur: JACQUEL, Nicolas, 59130 Lambersart (FR); DEGRAS, Sarah, 69100 Villeurbanne (FR); MERCIER, Régis, 69540 Irigny (FR); DELAUNAY, Thierry, 49350 Chenehutte (FR)
(74) Mandataire: Plasseraud IP
(86) Numéro de dépôt international: PCT/FR2019/000138
(87) Numéro de publication internationale: WO 2020/039128

(56) Documents cités:
- EP-A1- 3 170 855
- SABER CHATTI ET AL: "Poly(ether sulfone) of Isosorbide, Isomannide and Isoidide", HIGH PERFORMANCE POLYMERS, INSTITUTE OF PHYSICS PUBLISHING, BRISTOL, GB, vol. 21, no. 1, 1 février 2009 (2009-02-01), pages 105-118, XP008151327, ISSN: 0954-0083, DOI: 10.1177/0954008308088296 cité dans la demande
- CHAOUKI BELGACEM ET AL: "Copolyethersulfones of 1,4:3,6-dianhydrohexitols and bisphenol A", DESIGNED MONOMERS AND POLYMERS, vol. 19, no. 3, 29 janvier 2016 (2016-01-29), pages 248-255, XP055585593, DOI: 10.1080/15685551.2015.1136531 cité dans la demande

## Description

### DOMAINE DE L'INVENTION

La présente invention concerne un polymère de type polyéther aromatique à base d'un diol biosourcé furanique, un procédé de préparation dudit polymère, ainsi que l'utilisation dudit polymère pour la fabrication de membranes de pièces manufacturées et de revêtements.

### ÉTAT DE LA TECHNIQUE

L'industrie chimique, qui reste largement basée sur les ressources fossiles, entre dans une phase de transition vers l'utilisation de matières premières biosourcées plus durables. L'augmentation des prix des matières premières fossiles et les préoccupations environnementales croissantes, telles que les émissions de gaz à effet de serre, poussent la recherche académique et industrielle à explorer l'utilisation de la biomasse pour la production durable de carburants et de produits chimiques. Le développement de polymères biosourcés et d'autres matériaux suit la même tendance et constitue un domaine émergent et important.

Les polyéthers aromatiques, tels que les polyéthersulfones, les polyéthercétones et les polyétherbenzonitriles, sont reconnus comme étant des polymères de haute performance du fait de leurs excellentes stabilités thermiques et propriétés mécaniques. Ces polymères ont pour principale application les membranes de séparation en phase liquide et gazeuse. Les polyéthersulfones disponibles sur le marché sont notamment synthétisés à partir de diols aromatiques tels que le bisphénol A ou le 4,4'-dihydroxyphényle avec la dichlorodiphényle sulfone. Les industriels se sont ainsi intéressés à substituer partiellement les diols aromatiques par un diol provenant de la biomasse tels que l'isosorbide

Ainsi, Kricheldorf et al. ont d'abord décrit la préparation et la caractérisation de polyéthersulfones contenant de l'isosorbide à partir d'isosorbide silylé et de difluorodiphénylsulfone (H. Kricheldorf et al., J. Polymer Sci., Part A: Polym. Chem., 1995, 33, 2667-2671). L'isosorbide silylé ayant un coût élevé, Kricheldorf et Chatti ont modifié leurs conditions de polymérisation et ont décrit la synthèse de polyéthersulfones contenant de l'isosorbide à partir d'isosorbide non fonctionnalisé et de difluorodiphénylsulfone (S. Chatti et al., High Perform. Polym., 2009, 21, 105-118).

Belgacem et al. ont ensuite décrit la synthèse de polyéthersulfones contenant un 1,4:3,6-dianhydrohexitol et du bisphénol A, à partir de difluorodiphénylsulfone, d'un 1,4:3,6-dianhydrohexitol et de bisphénol A en tant que monomères mis à réagir ensemble dans le même milieu réactionnel (Belgacem et al., Des. Monomers Polym., 2016, 19, 248-255). Dans ces conditions, le polymère obtenu est un copolymère statistique dans lequel l'enchaînement des unités contenant le 1,4:3,6-dianhydrohexitol et le bisphénol A est aléatoire.

La demande US 2017/0240708 décrit également la synthèse de polyéthersulfones contenant un 1,4:3,6-dianhydrohexitol et du bisphénol A par un procédé similaire. Le polyéthersulfone obtenu est un copolymère statistique à base de bisphénol A et d'isosorbide. Cette même demande décrit également la synthèse d'un polyéthersulfone à partir de cyclohexanediméthanol et d'isosorbide.

Par ailleurs, Kanetaka et al. ont décrit la synthèse de polyéthercétones à partir d'un dérivé d'acide 2,5-furanedicarboxylique (Kanetaka et al., J. Pol. Sci., 2016, 54, 3094-3101).

Demeure toutefois et de manière générale, la volonté de l'homme du métier d'enrichir la bibliothèque de polymères de type polyéthers aromatiques obtenus à partir d'un diol biosourcé et ce, dans une démarche d'économie des matériaux fossiles, au profit de matières premières biosourcées.

De manière particulière, il existe aussi un besoin de fournir des polymères de ce type, présentant des caractéristiques aptes à les utiliser dans la fabrication de membranes. Ces caractéristiques sont, par exemple, des masses moléculaires moyennes en nombre (Mn) élevées qui sont nécessaires à l'obtention de propriétés filmogènes. Ces polymères peuvent aussi présenter de manière avantageuse une hydrophilie importante : dans le cas d'une membrane, celle-ci va s'humidifier rapidement, ce qui conduit à une filtration rapide avec des débits et des rendements élevés. Enfin, ces polymères peuvent aussi présenter des propriétés de perméabilité, et notamment de sélectivité vis-à-vis de certains gaz et/ou liquides, qui peuvent s'avérer particulièrement intéressantes, dans des procédés de filtration membranaires.

### RÉSUMÉ DE L'INVENTION

L'invention concerne un polymère de type polyéther aromatique de formule (**I**) comprenant un motif de répétition formé à partir d'un diol biosourcé furanique et d'un composé aromatique dihalogéné X-**Ar**-X, et un second motif de répétition formé à partir d'un co-diol HO-**D**-OH et d'un composé aromatique dihalogéné X-**Ar**-X : 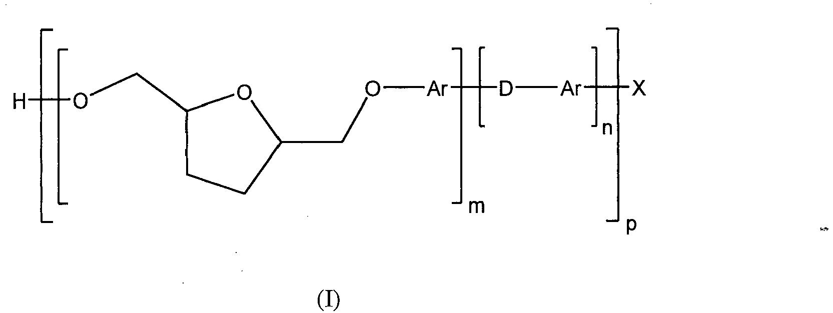 où
- **m** est un nombre entier supérieur à 1
- **n** est 0 ou un nombre entier supérieur à 1
- le ratio **m/n** est compris entre 100/0 et 1/99
- **p** est un nombre entier supérieur à 1
- **Ar** provient du composé aromatique dihalogéné et est sélectionné dans le groupe constitué de : 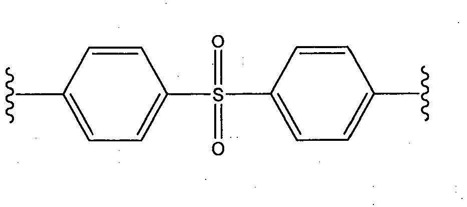 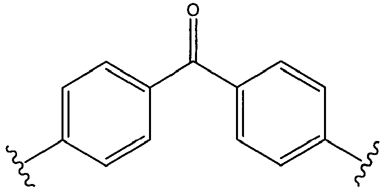 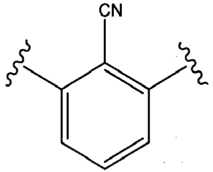
- **D** provient du co-diol et est sélectionné dans le groupe constitué de : 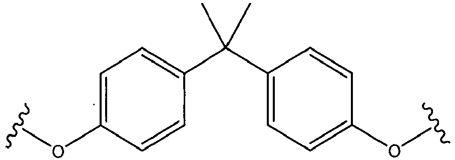 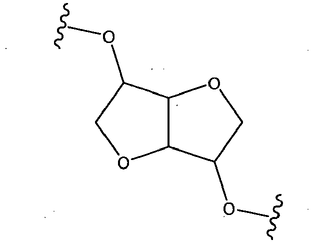 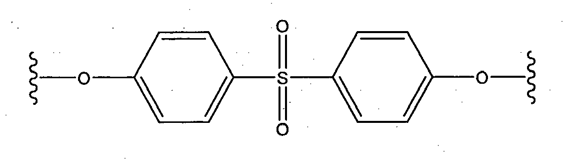 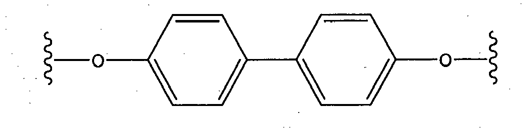 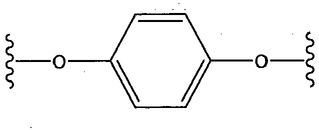 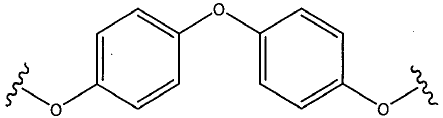 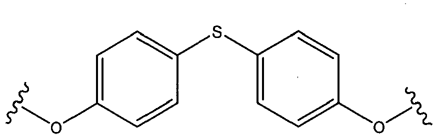 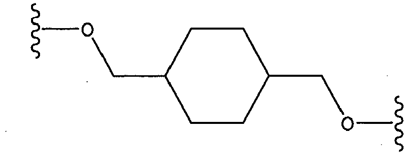 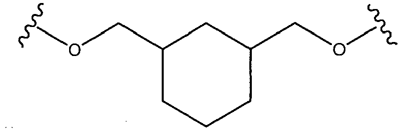 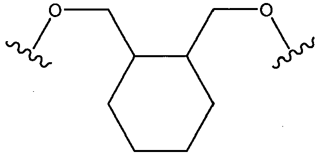 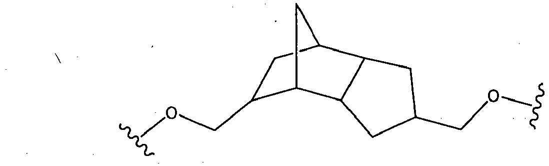 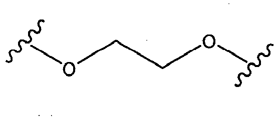 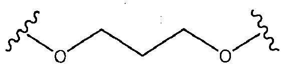 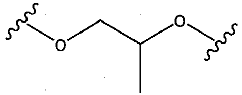 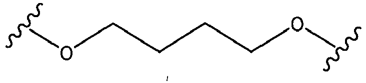 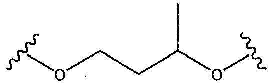 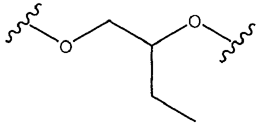 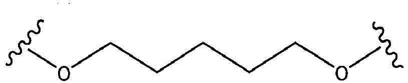 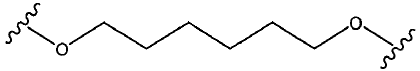
- **X** est un halogène, de préférence **X** est choisi parmi le fluor et le chlore, de préférence encore **X** est le fluor.

L'invention concerne également un procédé de préparation du polymère de type polyéther aromatique comprenant le ou les motifs de répétition de la formule I, comprenant une étape de réaction entre le tetrahydrofurane diméthanol, optionnellement en présence d'un co-diol, avec un composé aromatique dihalogéné en présence d'une base dans un solvant organique.

Un autre objet de la présente invention concerne l'utilisation du polymère selon l'invention pour la fabrication de membranes.

### DESCRIPTION DÉTAILLÉE

L'invention concerne un polymère de type polyéther aromatique de formule (**I**) comprenant un motif de répétition formé à partir d'un diol biosourcé furanique et d'un composé aromatique dihalogénéX-**Ar**-X, et optionnellement un second motif de répétition formé à partir d'un co-diol HO-**D**-OH et d'un composé aromatique dihalogéné X-**Ar**-X : 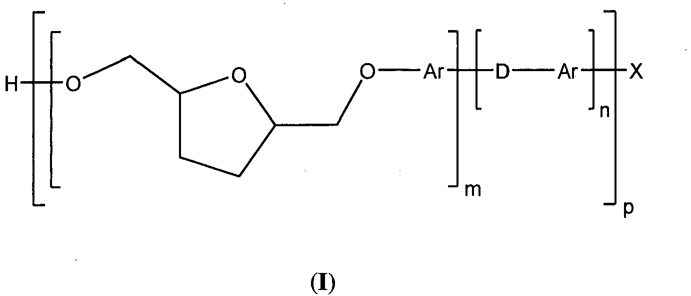 où
- **m** est un nombre entier supérieur à 1
- **n** est 0 ou un nombre entier supérieur à 1
- le ratio **m/n** est compris entre 100/0 et 1/99
- **p** est un nombre entier supérieur à 1
- **Ar** est sélectionné dans le groupe constitué de : 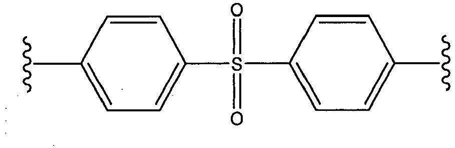 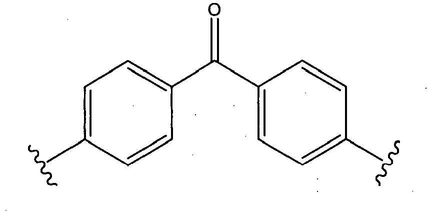 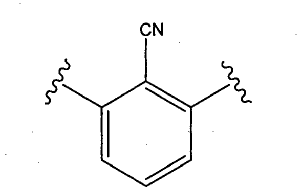
- D est sélectionné dans le groupe constitué de : 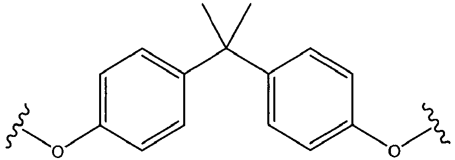 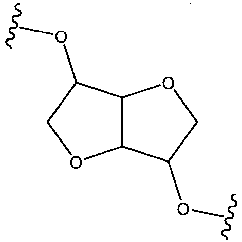 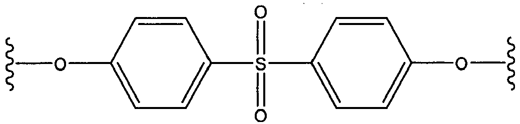 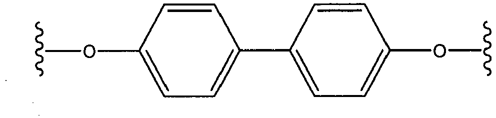 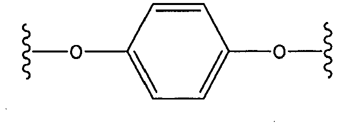 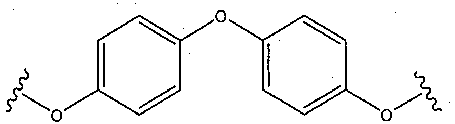 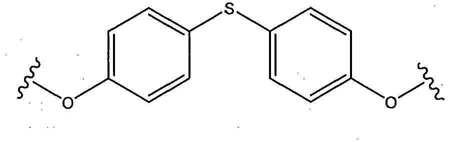 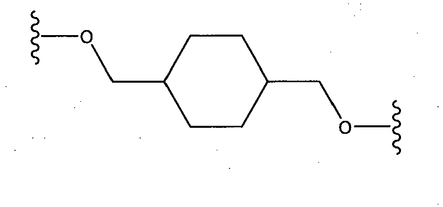 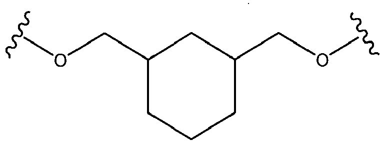 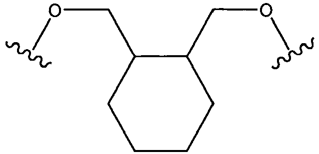 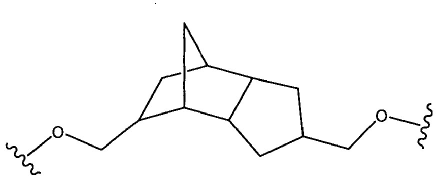 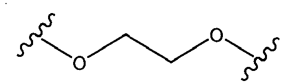 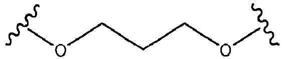 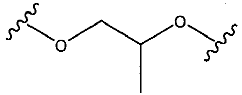 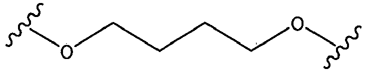 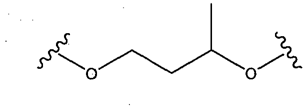 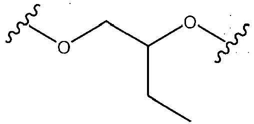 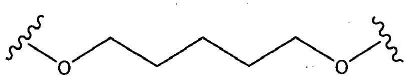 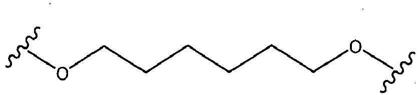
- **X** est un halogène, de préférence **X** est choisi parmi le fluor et le chlore, de préférence encore **X** est le fluor.

Il est du mérite des inventeurs d'avoir mis en évidence que l'incorporation de tetrahydrofurane diméthanol dans la chaîne de polymère permet d'améliorer le caractère hydrophile du polymère de l'invention. Cette hydrophilie importante est une propriété particulièrement intéressante pour la fabrication de membranes de filtration : ladite membrane va s'humidifier rapidement, ce qui conduit à une filtration rapide avec des débits et des rendements élevés. La présence de tetrahydrofurane diméthanol dans le polymère de l'invention permet également d'obtenir de bonnes propriétés de perméabilité.

Le polymère de la formule I peut se présenter sous la forme d'un copolymère statistique ou sous la forme d'un homopolymère.

Lorsque le ratio **m/n** est compris entre 99/1 et 1/99, le polymère selon l'invention se présente sous la forme d'un copolymère statistique. Par « copolymère statistique » on entend au sens de la présente invention un polymère issu de la copolymérisation d'au moins deux types de monomère, chimiquement différents, appelés co-monomères. Un copolymère statistique est donc formé d'au moins deux motifs de répétition enchaînés de manière aléatoire.

Lorsque le ratio **m/n** est de 100/0, le polymère selon l'invention se présente sous la forme d'un homopolymère. Par « homopolymère » on entend au sens de la présente invention un polymère issu d'une seule espèce de monomère. Tous les motifs de répétition d'un homopolymère sont donc de même nature chimique.

De manière générale, la masse moléculaire moyenne du polymère de la formule (I) est comprise entre 1 000 et 150 000 g/mol,.

Une classe particulière de polymères objets de la présente Demande sont les polymères de formule (I) telle que définie ci-dessus, dont la masse moléculaire moyenne est comprise entre 40 000 et 150 000 g/mol, de préférence entre 70 000 et 150 000 g/mol.

Des polymères préférés selon l'invention sont des polymères de formule (I) suivante 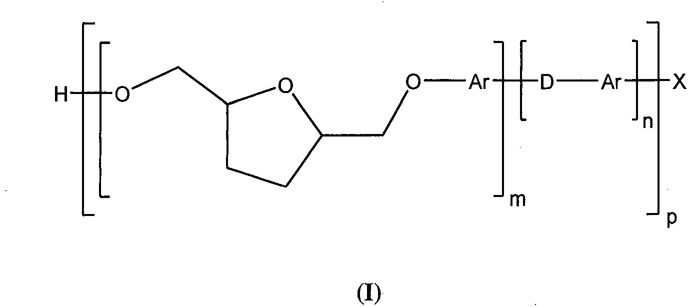 dans laquelle
- **m** est un nombre entier supérieur à 1
- **n** est 0 ou un nombre entier supérieur à 1
- le ratio **m/n** est compris entre 100/0 et 1/99, de préférence entre 100/0 et 10/90
- **p** est un nombre entier supérieur à 1
- **Ar** est sélectionné dans le groupe constitué de : 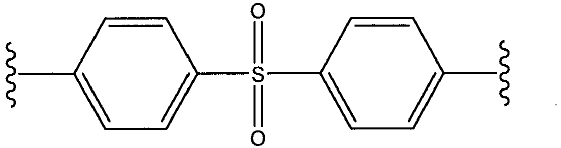 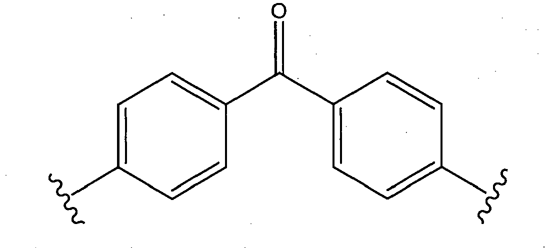 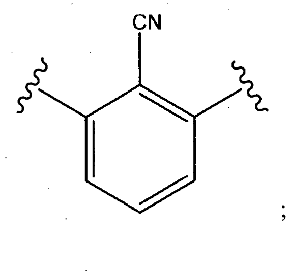
- D est sélectionné dans le groupe constitué de : 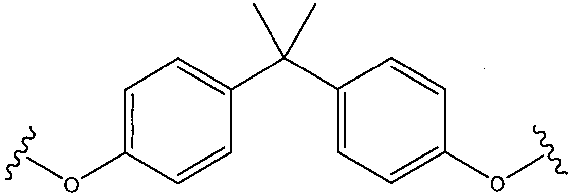 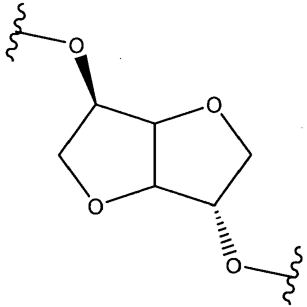 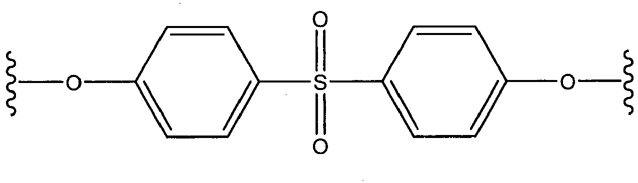 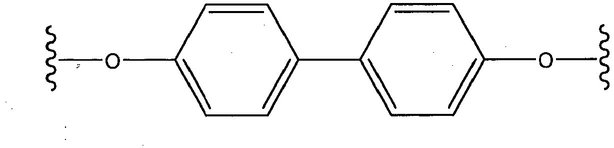
- X est un halogène, de préférence X est choisi parmi le fluor et le chlore, de préférence encore X est le fluor.

Dans un mode de réalisation plus préféré, le motif Ar est le suivant :

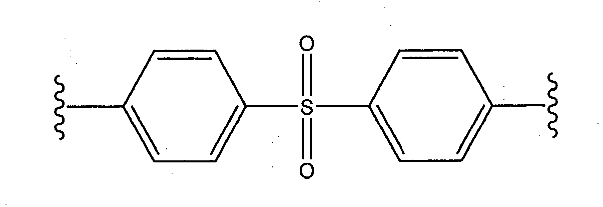

Selon ce mode de réalisation, le polymère de l'invention est celui comprenant les motifs de répétition de la formule (**II**) suivante : 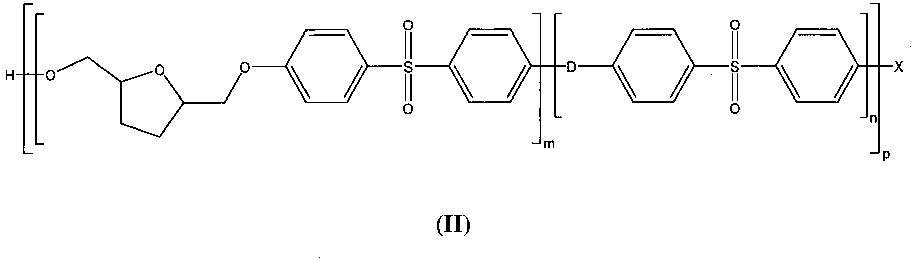 dans laquelle
- **m** est un nombre entier supérieur à 1
- **n** est 0 ou un nombre entier supérieur à 1
- le ratio **m/n** est compris entre 100/0 et 1/99, de préférence entre 100/0 et 10/90
- **p** est un nombre entier supérieur à 1
- **D** est sélectionné dans le groupe constitué de : 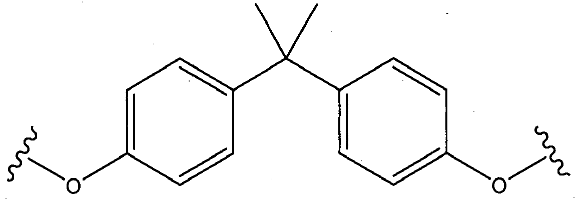 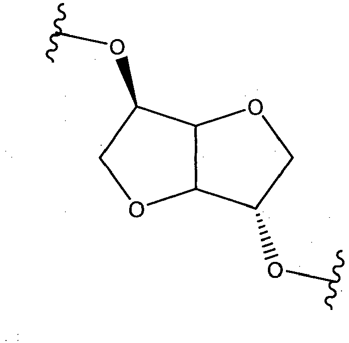 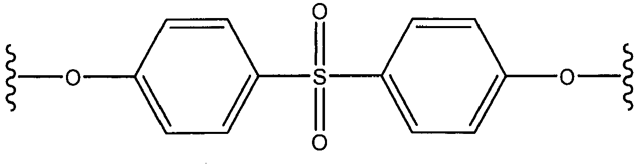 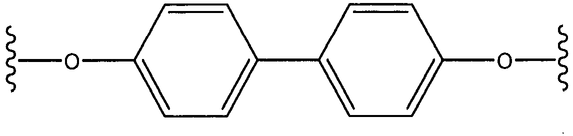
- **X** est un halogène, de préférence **X** est choisi parmi le fluor et le chlore, de préférence encore **X** est le fluor.

Dans un autre mode de réalisation plus préféré, le motif **D** est le suivant :

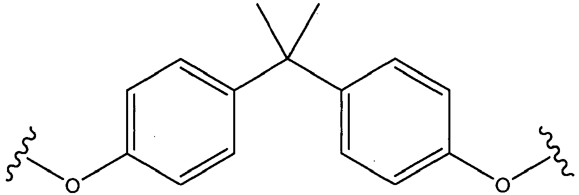

Selon ce mode de réalisation, le polymère selon l'invention est celui comprenant les motifs de répétition de la formule (III) suivante : 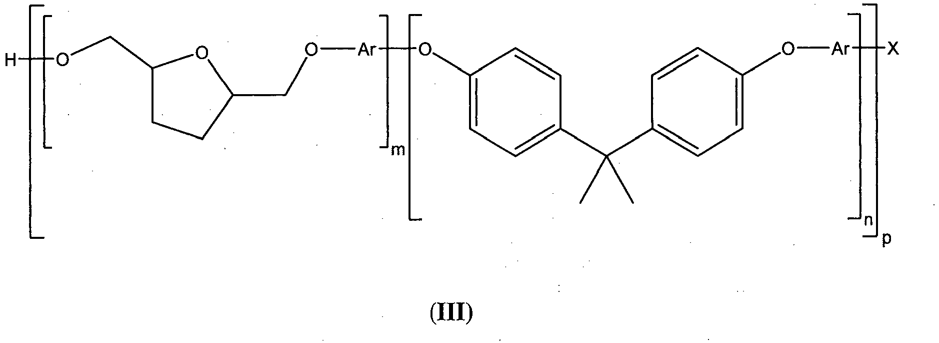 dans laquelle
- **m** est un nombre entier supérieur à 1
- **n** est 0 ou un nombre entier supérieur à 1
- le ratio **m/n** est compris entre 100/0 et 1/99, de préférence entre 100/0 et 10/90
- **p** est un nombre entier supérieur à 1
- **Ar** est sélectionné dans le groupe constitué de : 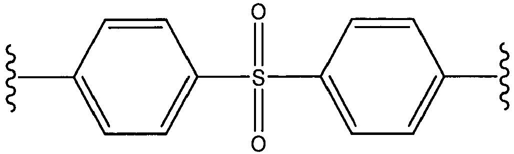 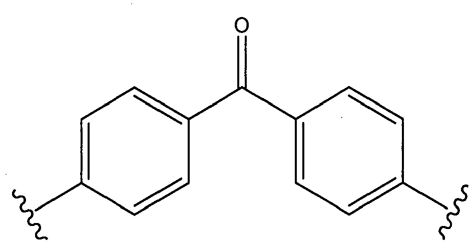 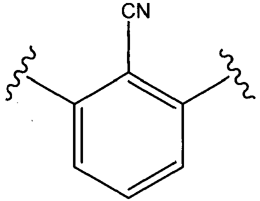
- **X** est un halogène, de préférence **X** est choisi parmi le fluor et le chlore, de préférence encore **X** est le fluor ;

Dans un mode de réalisation particulier, le ratio m/n du polymère de formule (**I**) est de 100/0. Le polymère de l'invention se présente alors sous la forme d'un homopolymère comprenant le motif de répétition de formule (**IV**) suivante : 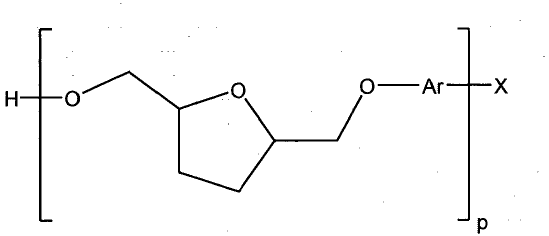 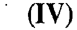 dans laquelle
- **p** est un nombre entier supérieur à 1
- **Ar** est sélectionné dans le groupe constitué de : 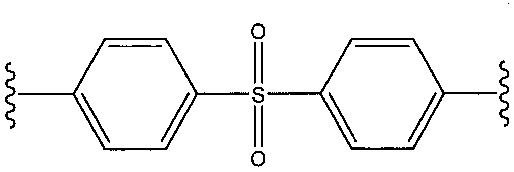 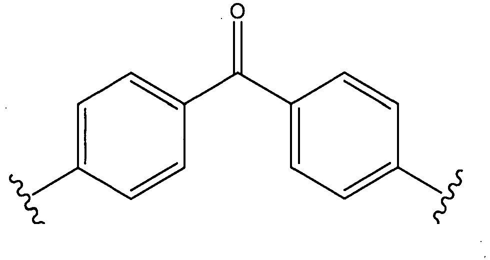 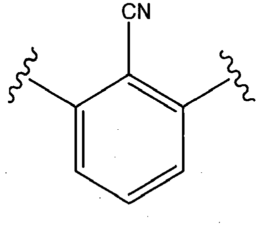
- **X** est un halogène, de préférence **X** est choisi parmi le fluor et le chlore, de préférence encore **X** est le fluor.

Selon ce dernier mode de réalisation où le ratio **m/n** est égal à 100/0, un polymère particulièrement préféré est celui de formule **(V)** suivante : 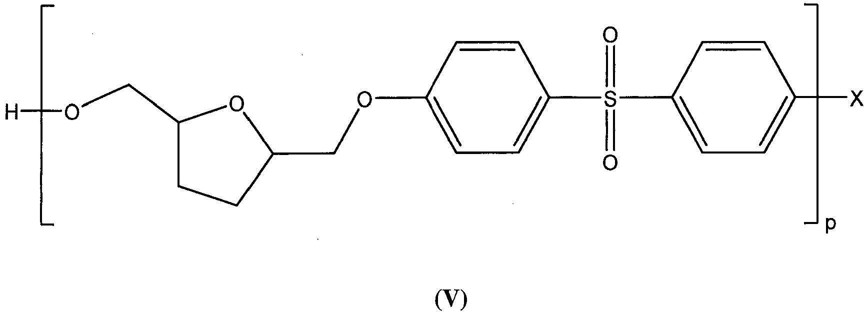 dans laquelle
- **p** est un nombre entier supérieur à 1
- **X** est un halogène, de préférence **X** est choisi parmi le fluor et le chlore, de préférence encore **X** est le fluor.

L'invention concerne également un procédé de préparation du polymère de type polyéther aromatique comprenant le ou les motifs de répétition de la formule (**I**).

Le procédé de préparation du polymère comprenant le ou les motifs de répétition de la formule (**I**) comprend une étape de réaction entre le tetrahydrofurane diméthanol, optionnellement en présence d'un co-diol HO-**D**-OH, avec un composé aromatique dihalogéné X-**Ar**-X en présence d'une base dans un solvant organique. Les co-diols et les composés aromatiques dihalogénés pouvant être utilisés sont ceux décrits ci-dessus..

De manière avantageuse, le procédé de l'invention permet de contrôler le ratio molaire entre le tetrahydrofurane diméthanol et le composé aromatique dihalogéné de manière à obtenir des polymères présentant une grande hydrophilie et/ou de bonnes propriétés de perméabilité.

Cette hydrophilie importante est une propriété particulièrement intéressante pour la fabrication de membranes de filtration : ladite membrane va s'humidifier rapidement, ce qui conduit à une filtration rapide avec des débits et des rendements élevés.

Ainsi, le procédé objet de la présente Demande est un procédé de préparation d'un polymère comprenant le ou les motifs de répétition de la formule (**I**), 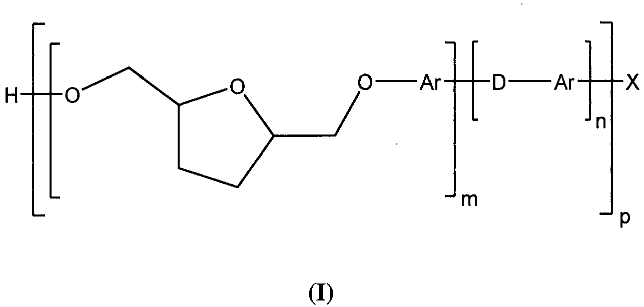 dans laquelle
- le ratio **m/n** est compris entre 100/0 et 1/99
- **p** est un nombre entier supérieur à 1
- **Ar** est sélectionné dans le groupe constitué de : 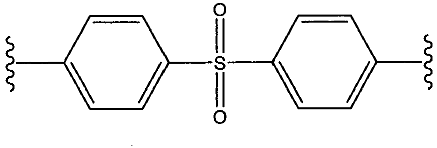 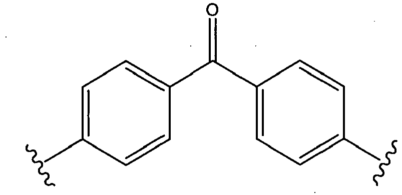 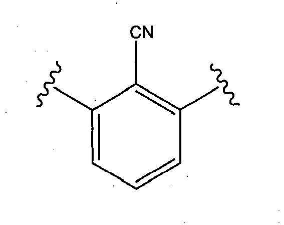
- **D** est sélectionné dans le groupe constitué de : 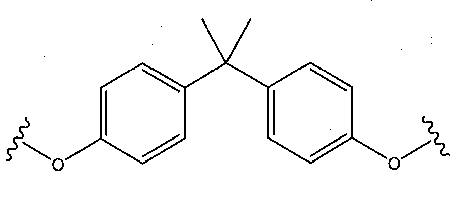 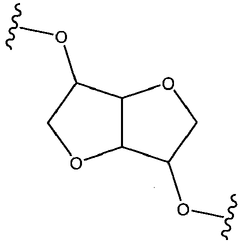 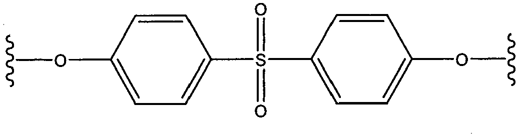 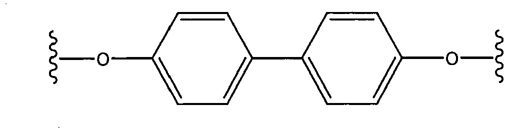 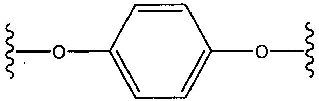 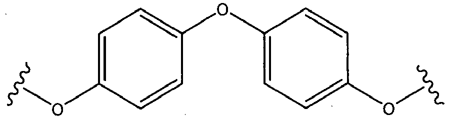 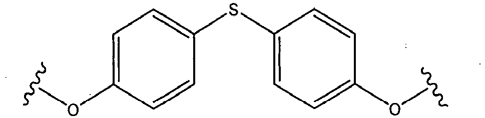 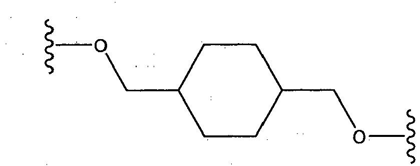 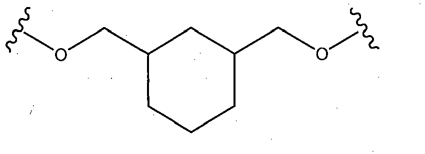 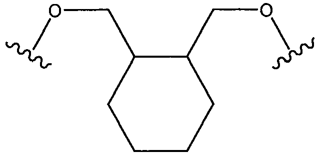 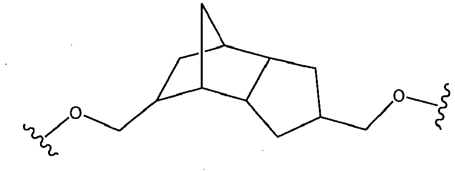 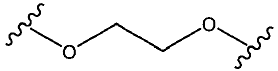 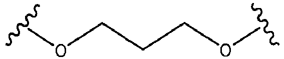 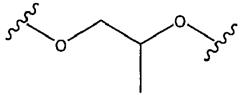 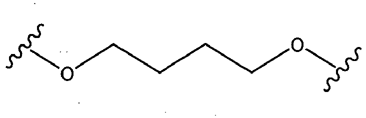 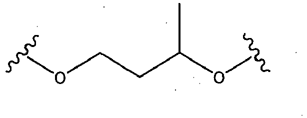 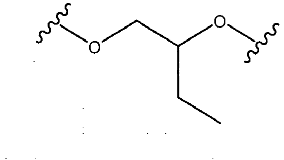 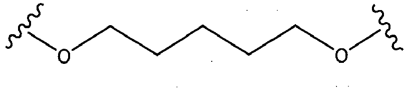 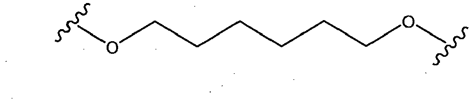
- **X** est un halogène, de préférence **X** est choisi parmi le fluor et le chlore, de préférence encore **X** est le fluor,
et comprend une étape de réaction entre le tetrahydrofurane diméthanol, éventuellement en présence d'un composé de formule OH-**D**-OH, avec un composé aromatique dihalogéné de formule X-**Ar**-X, en présence d'une base dans un solvant organique.

De manière générale, la masse moléculaire moyenne du polymère de la formule (I) est comprise entre 1 000 et 150 000 g/mol,.

Une classe particulière de polymères objets de la présente Demande sont les polymères de formule (I) précitée, dont la masse moléculaire moyenne est comprise entre 40 000 et 150 000 g/mol, de préférence entre 70 000 et 150 000 g/mol.

Des variantes du procédé selon l'invention, sont les variantes qui conduisent aux polymères de formules (**II**), (**III**), (**IV**) et (**V**), en opérant les choix relatifs aux composés X-**Ar**-X et HO-**D**-OH, au ratio **m/n** et à l'entier **p,** qui ont été explicités précédemment, en ce qui concerne lesdits polymères de formules (**II**), (**III**), (**IV**) et (**V**). Ces choix s'appliquent donc *mutatis mutandis* aux différentes variantes du procédé selon l'invention.

La réaction entre le tetrahydrofurane diméthanol, et optionnellement un co-diol, avec le composé aromatique dihalogéné est mise en oeuvre en présence d'une base dans un solvant organique et permet de former le polymère de l'invention.

La base est avantageusement choisie parmi les sels de métaux alcalins. De préférence, la base est choisie parmi le carbonate de potassium (K₂CO₃), le carbonate de sodium (Na₂CO₃), le carbonate de césium (CsCO₃), le carbonate de lithium (LiCO₃), le méthanolate de potassium, le méthanolate de sodium, l'éthanolate de potassium, le *tert-*butylate de potassium, le *tert*-pentylate de potassium, le bis(triméthyl)silanolate de potassium, le bis(triméthylsilyl)amide de potassium, l'hydroxyde de potassium, l'hydroxyde de sodium, et l'hydrure de sodium. De préférence encore, la base est choisie parmi le carbonate de potassium et le carbonate de sodium. Encore plus préférentiellement, la base est le carbonate de potassium et le carbonate de sodium.

Avantageusement, la proportion de base est comprise entre 1 et 3 équivalents en mole par rapport à la quantité totale de tetrahydrofurane diméthanol et de co-diol. De préférence, la proportion de base est d'environ 2 équivalents en mole par rapport à la quantité totale de tetrahydrofurane diméthanol et de co-diol.

Le solvant organique est avantageusement choisi parmi les solvants polaires aprotiques. Par « solvant polaire aprotique », on entend au sens de la présente invention un solvant possédant un moment dipolaire sans atome d'hydrogène acide, c'est-à-dire lié à un hétéroatome. De préférence, le solvant est choisi parmi les solvants polaires aprotiques comprenant un atome de soufre ou un atome d'azote. De préférence encore, le solvant est choisi parmi le diméthylsulfoxyde, le diéthylsulfoxyde, le sulfolane, la diméthylsulfone, la diéthylsulfone, la diphénylsulfone, la diisopropylsulfone, le tétrahydrothiophène-1-monoxyde, le diméthylacétamide, le diméthylformamide, la N-méthyl-2-pyrrolidone, et la N-cyclohexyl-2-pyrrolidone, seuls ou en mélange. Plus préférentiellement, le solvant est choisi parmi la N-méthyl-2-pyrrolidone et le diméthylsulfoxyde, seuls ou en mélange. Encore plus préférentiellement, le solvant est le diméthylsulfoxyde ou la N-méthyl-2-pyrrolidone.

Dans un mode de réalisation, un co-solvant peut être ajouté au solvant organique. Le co-solvant est avantageusement choisi parmi le toluène, le benzène, le chlorobenzène, le tetrahydrofurane, seuls ou en mélange. De préférence, le co-solvant est le toluène.

Ainsi, le polymère est formé par réaction entre le tetrahydrofurane diméthanol, optionnellement un co-diol, et le composé aromatique dihalogéné en tant que monomères. Avantageusement, la proportion totale en monomères, c'est-à-dire la somme de la quantité de tetrahydrofurane diméthanol, de co-diol et de composé aromatique dihalogéné, est comprise entre 10% et 50%, de préférence entre 20% et 40% en masse par rapport à la somme de la masse du solvant et de la masse des monomères. De préférence encore, la proportion en monomères est d'environ 30% en masse par rapport à la somme de la masse du solvant et de la masse des monomères.

Afin de démarrer la réaction entre le tetrahydrofurane diméthanol, optionnellement un co-diol et le composé aromatique dihalogéné pour former le polymère, le milieu réactionnel comprenant le tetrahydrofurane diméthanol, optionnellement un co-diol, et le composé aromatique dihalogéné est chauffé. Avantageusement, la préparation du polymère est réalisée à une température comprise entre 160°C et 240°C, de préférence entre 190°C et 230°C, de préférence encore entre 200°C et 220°C, pendant une durée comprise entre 30 minutes et 12 heures, de préférence entre 30 minutes et 6 heures, de préférence encore entre 1 heure et 3 heures. Encore plus préférentiellement, le polymère est réalisée à une température d'environ 210°C, pendant une durée d'environ 2 heures.

A l'issue de la réaction, le polymère obtenu peut être précipité par les techniques connues de l'homme du métier, comme par exemple la précipitation du milieu réactionnel dans un grand volume d'eau, environ 10 fois le volume du milieu réactionnel. Le polymère peut ensuite être séché selon les techniques connues de l'homme du métier comme par exemple dans une étuve à 80°C pendant 12 heures. Le polymère résultant peut enfin, de manière optionnelle, subir des étapes de post traitement, notamment en vue d'augmenter sa pureté ou d'améliorer certaines de ses propriétés.

Un autre objet de la présente invention concerne l'utilisation du polymère selon l'invention pour la fabrication de membranes, de pièces manufacturées et de revêtement.

Des membranes peuvent être fabriquées à partir du polymère selon l'invention selon les techniques connues de l'homme du métier.

En particulier, les membranes obtenues avec le polymère à selon l'invention présentent des propriétés d'hydrophilie et de perméabilité aux gaz intéressantes. Les membranes peuvent se présenter sous forme de films poreux ou non poreux. Les membranes peuvent être fabriquées sous forme de mono filament ou de fibres creuses. Le polymère selon l'invention peut être utilisé dans les milieux aqueux, incluant les fluides corporels. Le polymère selon l'invention est biocompatible et peut donc être utilisé sous forme de membrane dans le milieu médical comme pour les hémodialyses ou dans le milieu de la consommation (alimentaire et boissons), dans le milieu du traitement des eaux usées. Les membranes poreuses sous forme de tubes ou de fibres creuses peuvent présenter différentes tailles de pores connues de l'homme du métier en fonction de leurs applications (microfiltration, ultrafiltration, nanofiltration, osmose inverse). Les performances des membranes aqueuses obtenues avec le polymère selon l'invention peuvent être améliorées par les techniques connues de l'homme du métier, en particulier l'utilisation de monomères sulfonés ou le post-traitement des membranes par sulfonation ou par traitement de surface pour éviter l'encrassement.

Les membranes en phase gazeuse peuvent servir à la production d'azote à partir de la séparation du mélange azote, oxygène de l'air, la production du méthane à partir de la séparation du méthane et du CO₂.

Les membranes sous forme de films ou de plaques peuvent être utilisées pour l'optique ou pour l'emballage.

Des pièces moulées peuvent être fabriquées à partir du polymère de l'invention selon les techniques connues de l'homme du métier. Le moulage à injection du polymère selon l'invention peut conduire à la production de pièces utilisées dans le secteur de la santé, avec des applications dentaires pour remplacer les métaux, le verre et d'autres ustensiles jetables ou réutilisables, mais aussi dans le secteur aéronautique, électronique et automobile.

Un autre objet de cette invention est l'utilisation du polymère de l'invention en tant que résine de revêtement des métaux pour prévenir de la corrosion.

Le revêtement obtenu à partir du polymère selon l'invention peut être appliqué sur l'acier, l'aluminium, le cuivre, métaux utilisés dans le secteur de la consommation (alimentation et boisson), le secteur de la marine avec les coques des bateaux, les secteurs de l'aérospatial, de l'automobile, électrique avec les câbles et électronique avec les circuits. La résine obtenue à partir du polymère selon l'invention peut aussi être appliquée à d'autres substrats comme le verre ou la fibre de carbone pour former un composite après évaporation du solvant de la résine. Les composites formés à partir de la résine du polymère selon l'invention peuvent être utilisés dans le domaine aérospatial et automobile pour remplacer les pièces métalliques.

L'invention sera encore mieux comprise à la lecture des exemples qui suivent, lesquels se veulent purement illustratifs et ne limitent en rien la portée de la protection.

### EXEMPLES

### Exemple 1. Mode opératoire général de préparation d'un copolymère selon l'invention

Le tetrahydrofurane diméthanol et optionnellement un co-diol (5 mmol au total), le composé aromatique dihalogéné (5 mmol) et le carbonate de potassium (1,3961 g, 10 mmol) sont introduits dans un ballon tricol de 100 mL équipé d'une pale d'agitation, d'une entrée et d'une sortie d'azote pour éviter l'oxydation. L'ensemble est solubilisé dans le DMSO (5 mL) et est porté à 210°C avec une agitation de 50 rpm. Après 2 h à 9 h de chauffage à 210°C, le milieu est dilué avec 10 mL de DMSO. Lorsque le milieu est revenu à température ambiante, le polymère est précipité dans 100 mL d'eau distillée dans un bécher sous agitation magnétique. Après 1 h d'agitation le polymère est récupéré par filtration Büchner puis il est séché dans une étuve pendant 12 h à 80°C. Le polymère est analysé en SEC, RMN ¹H et DSC.

### Résonance Magnétique Nucléaire (RMN)

Les spectres 100MHz ¹³C ont été réalisés sur un Brüker Ascend^{™} 400 dans un tube en verre de 5mm dans le DMSO- *d*₆.

### Calorimétrie différentielle à balayage (DSC)

L'analyse de calorimétrie différentielle à balayage a été réalisée sur une DSC-Q5000 SA, TA Instruments, USA avec un débit de 50ml/min à l'azote à 10°C/min ou 20°C/min de 20°C à 300°C et dans un creuset en aluminium percé.

### Chromatographie d'Exclusion Stérique (SEC)

L'analyse des masses molaires a été réalisée par chromatographie d'exclusion stérique avec une colonne Agilent PLgel 5µm dans le DMF/LiBr à 50°C pendant 35min avec un débit de 0,5mL/min et en calibration PS.

### Polymère 1. THFDM/co-diol = 100/0

Le polymère 1 est préparé selon le mode opératoire général ci-dessus à partir de tetrahydrofurane diméthanol (5 mmol) et de difluorodiphényle sulfone (5 mmol) en tant que composé aromatique dihalogéné.

### Polymère 2. THFDM/co-diol = 100/0

Le polymère 2 est préparé selon le mode opératoire général ci-dessus à partir de tetrahydrofurane diméthanol (5 mmol) et de dichlorodiphényle sulfone (5 mmol) en tant que composé aromatique dihalogéné.

### Polymère 3. THFDM/co-diol = 100/0

Le polymère 3 est préparé selon le mode opératoire général ci-dessus à partir de tetrahydrofurane diméthanol (5 mmol) et de difluorobenzonitrile (5 mmol) en tant que composé aromatique dihalogéné.

### Polymère 4. THFDM/co-diol = 100/0

Le polymère 4 est préparé selon le mode opératoire général ci-dessus à partir de tetrahydrofurane diméthanol (5 mmol) et de difluorobenzophénone (5 mmol) en tant que composé aromatique dihalogéné.

### Polymère 5. THFDM/BPA = 20/80

Le polymère 5 est préparé selon le mode opératoire général ci-dessus à partir de tetrahydrofurane diméthanol (1 mmol), de Bisphénol A (4 mmol) en tant que co-diol et de difluorodiphényle sulfone (5 mmol) en tant que composé aromatique dihalogéné.

### Polymère 6. THFDM/BPA = 25/75

Le polymère 6 est préparé selon le mode opératoire général ci-dessus à partir de tetrahydrofurane diméthanol (1,25 mmol), de Bisphénol A (3,75 mmol) en tant que co-diol et de difluorodiphényle sulfone (5 mmol) en tant que composé aromatique dihalogéné.

### Polymère 7. THFDM/BPA = 40/60

Le polymère 7 est préparé selon le mode opératoire général ci-dessus à partir de tetrahydrofurane diméthanol (2 mmol), de Bisphénol A (3 mmol) en tant que co-diol et de difluorodiphényle sulfone (5 mmol) en tant que composé aromatique dihalogéné.

### Polymère 8. THFDM/BPA = 50/50

Le polymère 8 est préparé selon le mode opératoire général ci-dessus à partir de tetrahydrofurane diméthanol (2,5 mmol), de Bisphénol A (2,5 mmol) en tant que co-diol et de difluorodiphényle sulfone (5 mmol) en tant que composé aromatique dihalogéné.

### Polymère 9. THFDM/BPA = 60/40

Le polymère 9 est préparé selon le mode opératoire général ci-dessus à partir de tetrahydrofurane diméthanol (3 mmol), de Bisphénol A (2 mmol) en tant que co-diol et de difluorodiphényle sulfone (5 mmol) en tant que composé aromatique dihalogéné.

### Polymère 10. THFDM/BPA = 80/20

Le polymère 10 est préparé selon le mode opératoire général ci-dessus à partir de tetrahydrofurane diméthanol (4 mmol), de Bisphénol A (1 mmol) en tant que co-diol et de difluorodiphényle sulfone (5 mmol) en tant que composé aromatique dihalogéné.

### Polymère 11. THFDM/BB = 50/50

Le polymère 11 est préparé selon le mode opératoire général ci-dessus à partir de tetrahydrofurane diméthanol (2,5 mmol), de 4,4'-dihydroxydiphényle (2,5 mmol) en tant que co-diol et de difluorodiphényle sulfone (5 mmol) en tant que composé aromatique dihalogéné.

### Polymère 12. THFDM/Bis S = 50/50

Le polymère 12 est préparé selon le mode opératoire général ci-dessus à partir de tetrahydrofurane diméthanol (2,5 mmol), de Bisphénol S (2,5 mmol) en tant que co-diol et de difluorodiphényle sulfone (5 mmol) en tant que composé aromatique dihalogéné.

### Polymère 13. THFDM/IS = 50/50

Le polymère 13 est préparé selon le mode opératoire général ci-dessus à partir de tetrahydrofurane diméthanol (2,5 mmol), d'isosorbide (2,5 mmol) en tant que co-diol et de difluorodiphényle sulfone (5 mmol) en tant que composé aromatique dihalogéné.

Les caractérisations des polymères selon l'invention 1 à 13 sont présentées dans le tableau 1.

Le Polymère 14 un polyéthersulfone acheté chez ACROS ORGANICS 178910050 sous forme de granulés transparents. Ce produit est un polyéthersulfone à base de bisphénol A et de dérivé diphényle sulfone.

**Tableau 1**

| **Polymère** | | | | **Caractérisation** | |
|---|---|---|---|---|---|
| | **Dihalogéné** | **Ratio** THFDM/Co-diol | **Durée de réaction (h)** | **Mn (g/mol)** | **Tg (°C)** |
| 1 | Difluorodiphényle sulfone | 100/0 | 2 | 80 000 | 145 |
| 2 | Dichlorodiphényle sulfone | 100/0 | 8 | 10 000 | 129 |
| 3 | Difluorobenzonitrile | 100/0 | 9 | 12 000 | 126 |
| 4 | Difluorobenzophénone | 100/0 | 9 | 13 500 | 103 |
| 5 | Difluorodiphényle sulfone | 20/80 | 3 | 31 000 | 184 |
| 6 | Difluorodiphényle sulfone | 25/75 | 7 | 36 000 | 178 |
| 7 | Difluorodiphényle sulfone | 40/60 | 3 | 22 000 | 167 |
| 8 | Difluorodiphényle sulfone | 50/50 | 8 | 45 000 | 154 |
| 9 | Difluorodiphényle sulfone | 60/40 | 3 | 26 000 | 160 |
| 10 | Difluorodiphényle sulfone | 80/20 | 3 | 21 900 | 145 |
| 11 | Difluorodiphényle sulfone | 50/50 | 3 | 32 000 | 177 |
| 12 | Difluorodiphényle sulfone | 50/50 | 3 | 26 900 | 181 |
| 13 | Difluorodiphényle sulfone | 50/50 | 3 | 22 600 | 168 |
| 14 | - | - | - | 90 000 | 190 |

Ce tableau illustre les caractéristiques de procédé mis en eouvre, et certaines des caractéristiques physico-chimiques des polymères résultant. Il démontre bien la possibilité d'obtenir des polyéthers aromatiques avantageusement à partir d'un composé biosourcé.

### Exemple 2. Mode opératoire général de préparation de membranes à partir de polymères selon l'invention et comparaison avec une membrane obtenue à partir d'un polymère commercial

Une membrane est préparée à partir d'une solution du polymère à 20%m dans la NMP coulée sur une plaque en verre. Le solvant est ensuite évaporé à l'aide du cycle thermique suivant : 50°C pendant 12h, 80°C pendant 1 h, 120°C pendant 1 h, 150°C pendant 1 h et 200°C pendant 2 h. Après la cuisson une membrane est obtenue.

Des membranes ont été préparées selon le mode opératoire général ci-dessus à partir des polymères **1, 6** et **8** selon l'invention en comparaison avec une membrane préparée à partir d'un polymère commercial.

Les caractérisations appliquées aux membranes sont décrites ci-dessous :

### Angle de contact

L'angle de contact des membranes préparées à partir des polymères **1** et **8** selon l'invention a été mesuré avec l'eau et le diiodométhane selon le modèle de Owens, Wendt, Rabel et Kaelble.

### Sorption Dynamique

La mesure de reprise en eau a été réalisée avec un appareil de Sorption Dynamique de Vapeur (DVS Q-5000 SA, TA Instruments) à la pression atmosphérique et à l'isotherme de 21°C avec un cycle sorption/désorption de 0 à 90% d'humidité.

Les résultats sont présentés dans le tableau 2.

**Tableau 2**

| | **Energie de surface** | | | **Angle de contact** | | **Sorption à 50% (g d'eau/g échantillon)** |
|---|---|---|---|---|---|---|
| **Polymère** | **Energie (mN/m)** | **Partie polaire (mN/m)** | **Partie disperse (mN/m)** | **Eau (°)** | **Diiodométhane (°)** | |
| 1 | 49,7 | 29,9 | 19,9 | 55,8 | 57,8 | 1,37% |
| 8 | 43,5 | 34,9 | 8,6 | 70,9 | 49,2 | 0,88% |
| 6 | 51,5 | 38,5 | 13,0 | 59,8 | 41,9 | 0,91 % |
| Référence | 44,6 | 43,9 | 0,7 | 89,2 | 32,3 | 0,39% |

Ces résultats montrent que l'hydrophilie des polymères selon l'invention augmente en fonction du taux d'incorporation du tétrahydrofurane diméthanol. En effet, la mesure d'angle de contact des membranes préparées à partir des polymères 1 et 8 permet d'attester de la mouillabilité des films contenant du THFDM par rapport à la référence de PES. L'augmentation de l'énergie de surface en fonction du taux d'incorporation du tétrahydrofurane diméthanol permet la création d'interactions plus fortes du film de polymère avec la goutte d'eau. Ceci conduit ainsi à une diminution de l'angle de contact de l'eau en fonction du taux d'incorporation du tétrahydrofurane diméthanol. Enfin, et de manière particulièrement avantageuse, les polymères selon l'invention présentent une capacité d'apsorption d'eau bien supérieure à la référence : cette hydrophilie beaucoup plus marquée est particulièrement avantageuse pour une membrane, dont la capacité à s'hydrater rapidement va conditionner son rendement et son efficacité.

### Perméabilité

Les expériences sont réalisées à température ambiante. La manipulation consiste à insérer le film à étudier dans la cellule de perméation. Après une désorption sous vide secondaire de 16 h, l'expérience de perméation consiste à imposer une pression (3 bar) d'un gaz choisi dans le compartiment amont de la cellule et à mesurer la remontée de pression dans le compartiment aval de la cellule. La perméabilité est calculée à partir de la pente de la droite pression en fonction du temps dans le régime stationnaire, corrigée du vide statique si nécessaire. Les propriétés de perméation de gaz des membranes préparées à partir du polymère 6 selon l'invention ont été mesurées. Les résultats sont présentés dans le tableau 3.

**Tableau 3**

| | **P(He)** | **P(CO₂)** | **P(O₂)** | **Sélectivité He/CO₂** | **Sélectivité CO₂/O₂** |
|---|---|---|---|---|---|
| **Polymère 6** | 9,2 | 3,9 | 0,62 | 2,36 | 6,29 |
| **Référence** | 12,4 | 6,1 | 2,65 | 2,03 | 2,30 |

Ces résultats montrent que la membrane préparée à partir du polymère **6** contenant seulement 25% en mole de THFDM présente une sélectivité pour le dioxyde de carbone par rapport à l'oxygène (6,29) supérieure à celle de la membrane de référence obtenue avec un PES commercial (2,3).

## Revendications

1. Polymère de type polyéther aromatique de formule I comprenant un motif de répétition formé à partir d'un diol biosourcé furanique et d'un composé aromatique X-**Ar**-X, et optionnellement un second motif de répétition formé à partir d'un co-diol HO-D-OH et d'un composé aromatique X-**Ar**-X: 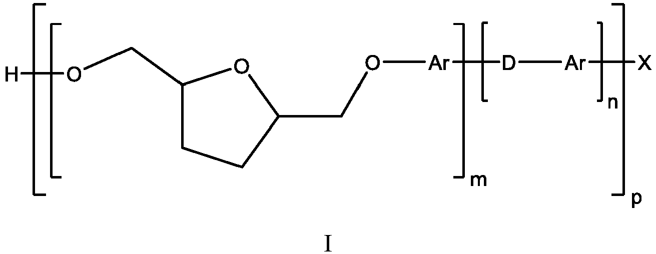 où
Ar est sélectionné dans le groupe constitué de : 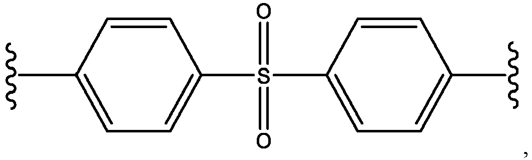 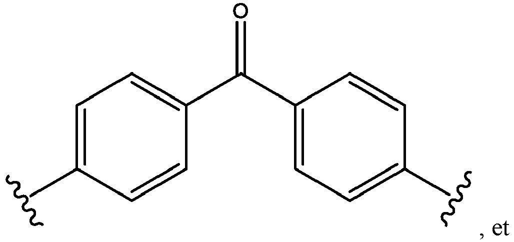 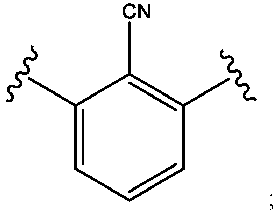 **D** est sélectionné dans le groupe constitué de : 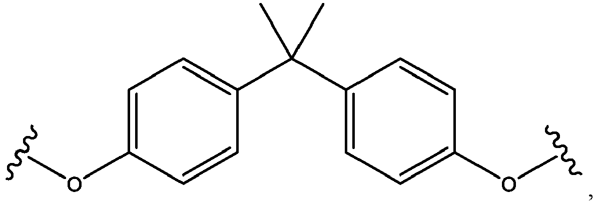 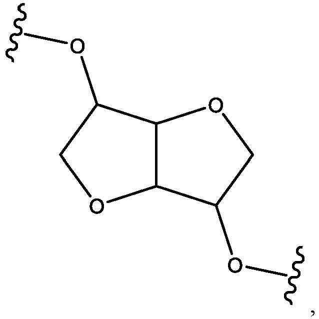 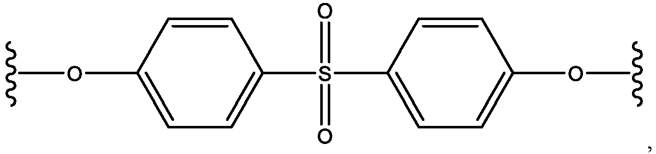 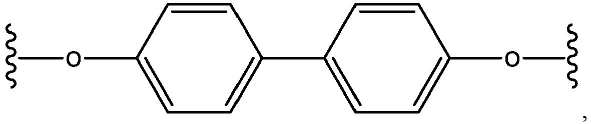 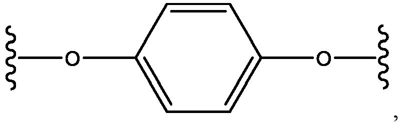 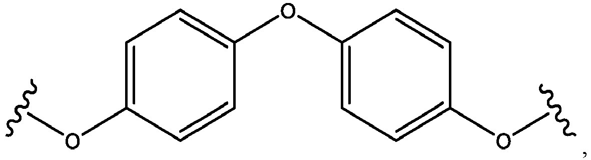 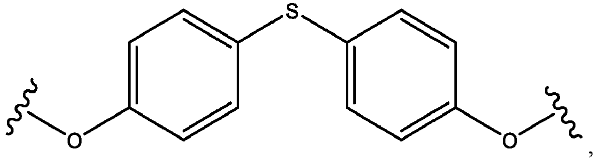 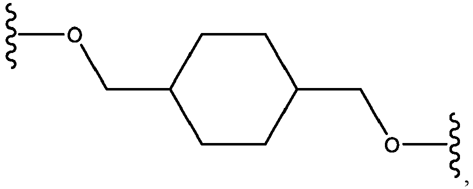 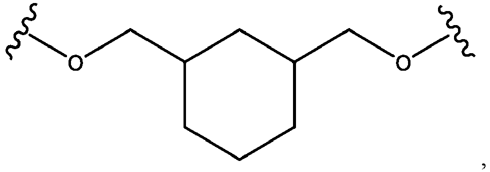 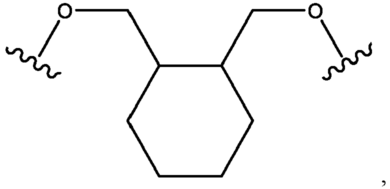 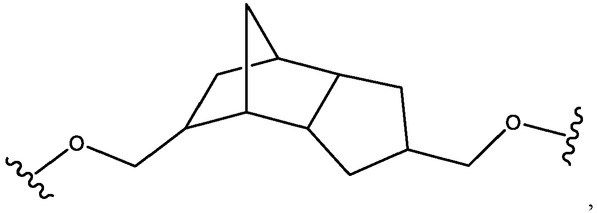 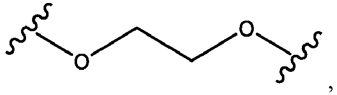 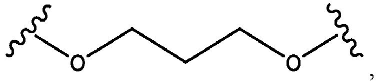 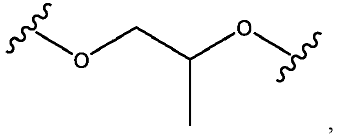 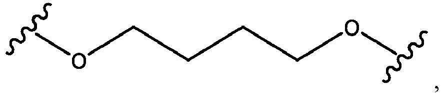 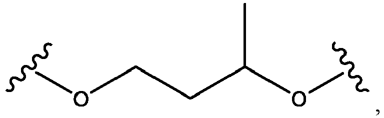 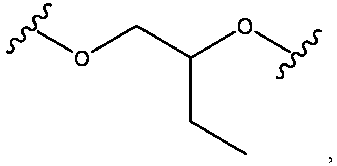 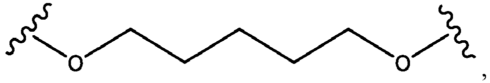 et 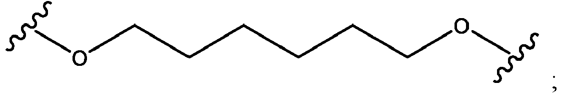
- **X** est un halogène
- **m** est un nombre entier supérieur à 1
- **n** est 0 ou un nombre entier supérieur à 1
- le ratio **m/n** est compris entre 100/0 et 1/99
- **p** est un nombre entier supérieur à 1.

2. Polymère de formule **(I)** selon la revendication 1 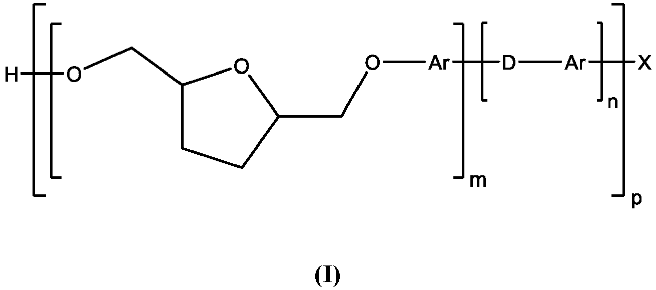 dans laquelle
- le ratio **m/n** est compris entre 100/0 et 1/99, de préférence entre 100/0 et 10/90
- **p** est un nombre entier supérieur à 1
- **Ar** est sélectionné dans le groupe constitué de : 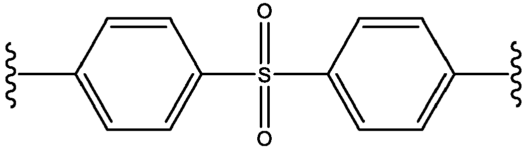 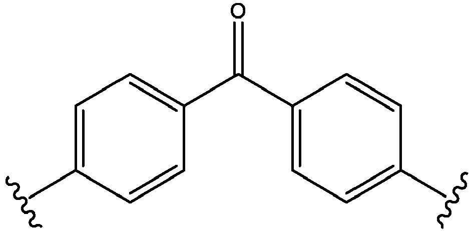 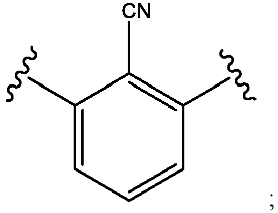
- **D** est sélectionné dans le groupe constitué de : 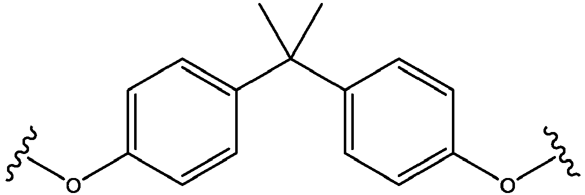 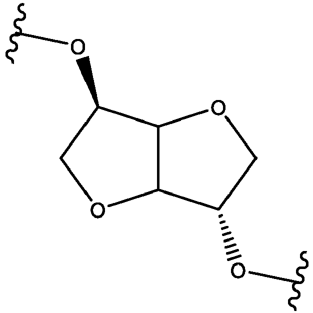 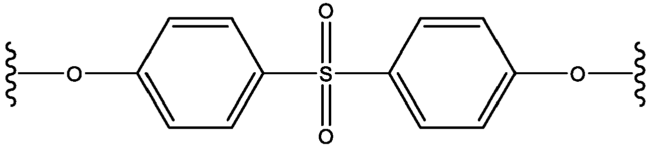 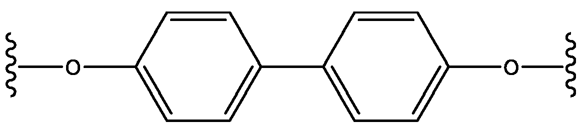
- **X** est un halogène, de préférence **X** est choisi parmi le fluor et le chlore, de préférence encore **X** est le fluor.

3. Polymère de formule (**II**) selon la revendication 1 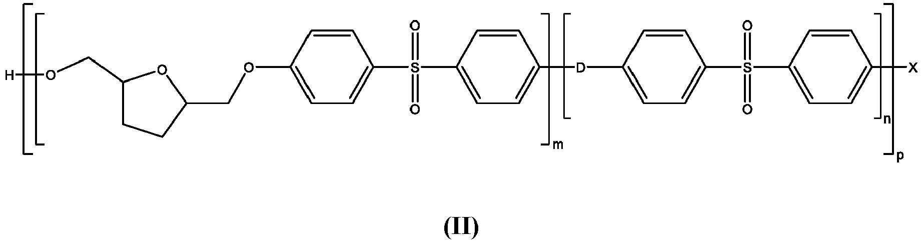 dans laquelle
- le ratio **m/n** est compris entre 100/0 et 1/99, de préférence entre 100/0 et 10/90
- **p** est un nombre entier supérieur à 1
- **D** est sélectionné dans le groupe constitué de : 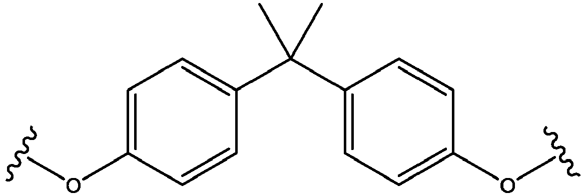 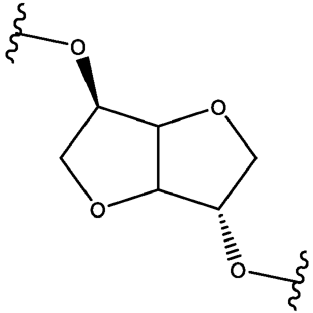 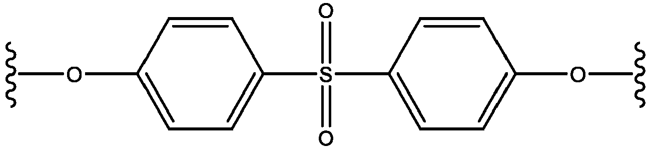 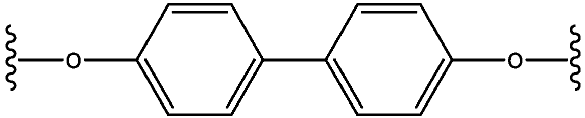
- **X** est un halogène, de préférence **X** est choisi parmi le fluor et le chlore, de préférence encore **X** est le fluor.

4. Polymère de formule (III) selon la revendication 1 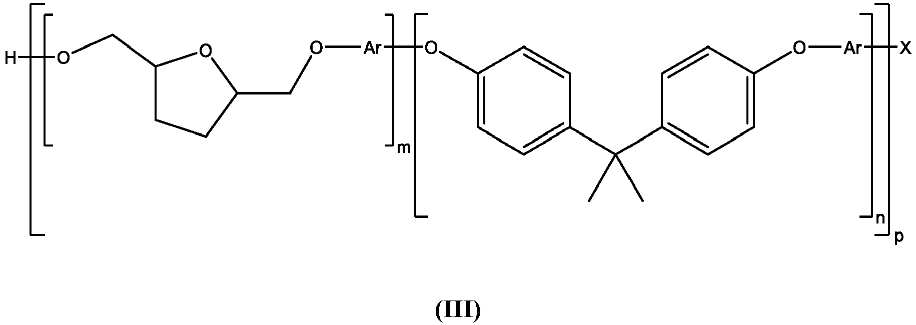 dans laquelle
- **m** est un nombre entier supérieur à 1
- **n** est 0 ou un nombre entier supérieur à 1
- le ratio **m/n** est compris entre 100/0 et 1/99, de préférence entre 100/0 et 10/90
- **p** est un nombre entier supérieur à 1
- **Ar** est sélectionné dans le groupe constitué de : 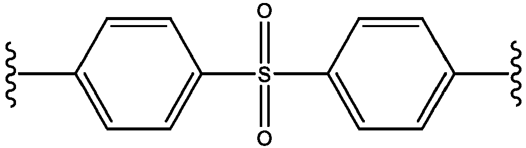 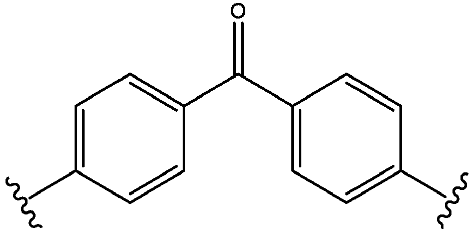 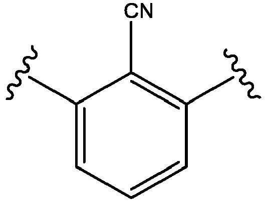
- **X** est un halogène, de préférence **X** est choisi parmi le fluor et le chlore, de préférence encore **X** est le fluor

5. Polymère de formule (**IV**) selon la revendication 1 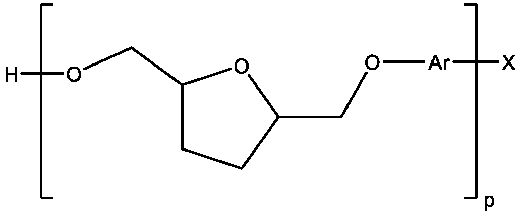 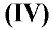 dans laquelle
- **p** est un nombre entier supérieur à 1
- **Ar** est sélectionné dans le groupe constitué de : 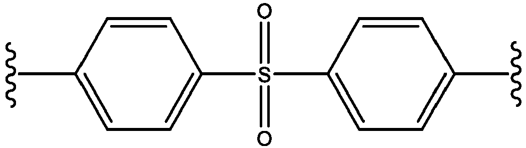 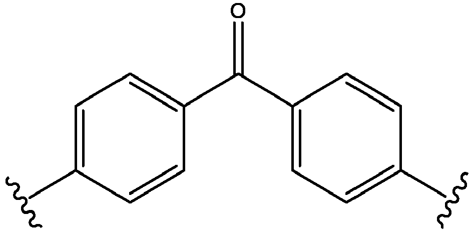 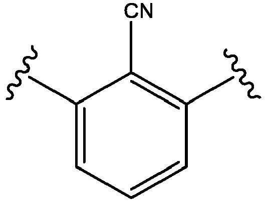
- **X** est un halogène, de préférence **X** est choisi parmi le fluor et le chlore, de préférence encore **X** est le fluor.

6. Polymère de formule (**V**) selon la revendication 1 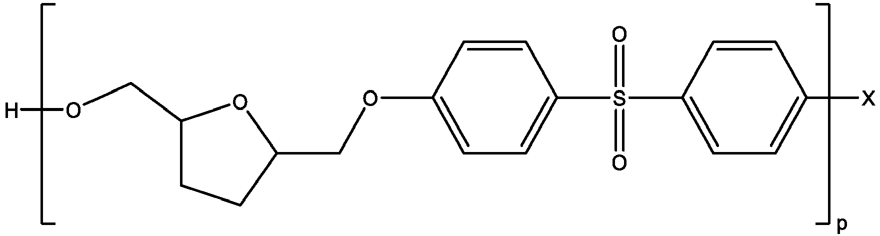 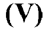 dans laquelle
- **p** est un nombre entier supérieur à 1
- **X** est un halogène, de préférence **X** est choisi parmi le fluor et le chlore, de préférence encore **X** est le fluor.

7. Procédé de de préparation d'un polymère comprenant le ou les motifs de répétition de la formule (**I**): 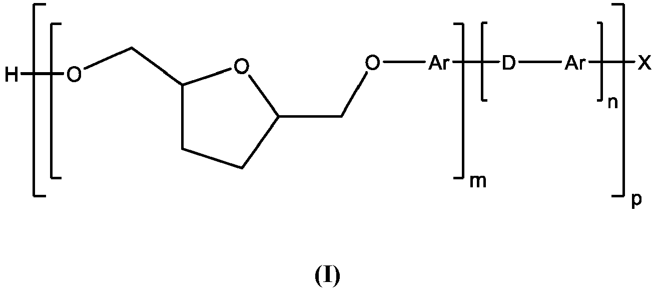 dans laquelle
- **m** est un nombre entier supérieur à 1
- **n** est 0 ou un nombre entier supérieur à 1
- le ratio **m/n** est compris entre 100/0 et 1/99
- **p** est un nombre entier supérieur à 1
- **Ar** est sélectionné dans le groupe constitué de : 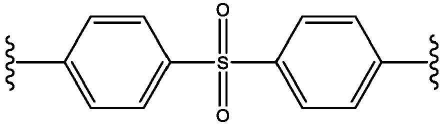 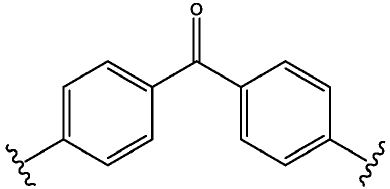 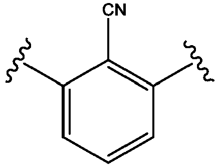
- **D** est sélectionné dans le groupe constitué de : 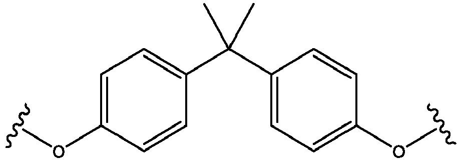 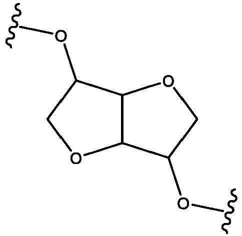 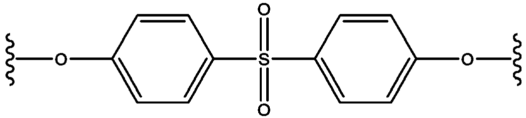 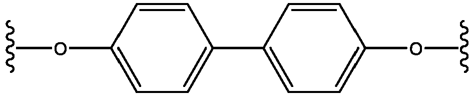 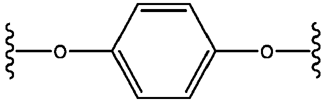 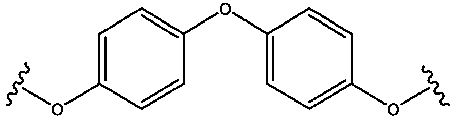 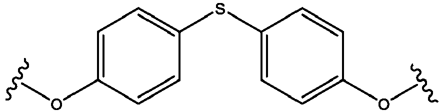 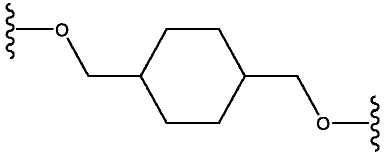 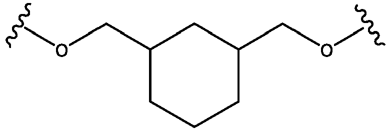 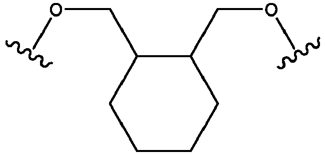 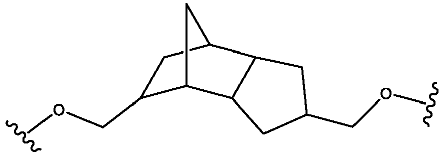 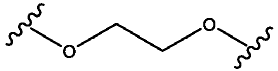 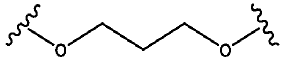 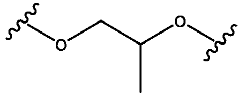 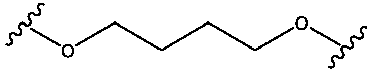 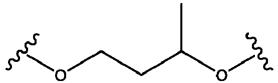 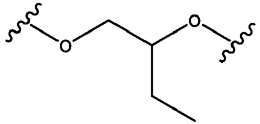 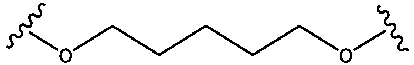 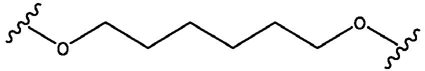
- **X** est un halogène, de préférence **X** est choisi parmi le fluor et le chlore, de préférence encore **X** est le fluor
et comprend une étape de réaction entre le tetrahydrofurane diméthanol, optionellement en présence d'un composé de formule HO-**D**-OH, avec un composé aromatique dihalogéné de formule X-**Ar**-X, en présence d'une base dans un solvant organique.

8. Procédé selon la revendication 7, **caractérisé en ce que** le ratio molaire tetrahydrofurane diméthanol/co-diol est compris entre 100/0 et 1/99.

9. Procédé selon la revendication 7 ou 8, **caractérisé en ce que** la base est choisie parmi les sels de métaux alcalins.

10. Procédé selon l'une quelconque des revendications 7 à 9, **caractérisé en ce que** le solvant organique est choisi parmi les solvants polaires aprotiques.

11. Procédé selon l'une quelconque des revendications 7 à 10, **caractérisé en ce que** la proportion en monomères est comprise entre 10% et 50% en masse par rapport à la somme de la masse du solvant et de la masse des monomères.

12. Procédé selon l'une quelconque des revendications 7 à 11, **caractérisé en ce que** la réaction entre le tetrahydrofurane diméthanol, optionnellement en présence d'un co-diol, avec un composé aromatique dihalogéné est réalisée à une température comprise entre 160°C et 240°C.

13. Utilisation d'un polymère selon l'une des revendications 1 à 6 pour la fabrication de membranes de pièces manufacturées et de revêtements.

## Patentansprüche

1. Polymer vom Typ aromatischer Polyether der Formel I, umfassend eine Wiederholungseinheit, die aus einem biobasierten Furandiol und einer aromatischen Verbindung X-**Ar**-X gebildet ist, und gegebenenfalls eine zweite Wiederholungseinheit, die aus einem Co-Diol HO-**D**-OH und einer aromatischen Verbindung X-**Ar**-X gebildet ist: 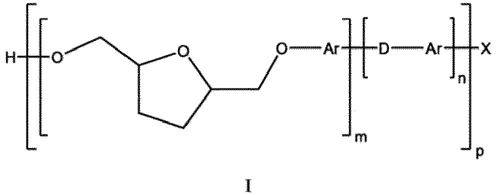 wobei gilt:
**Ar** ist gewählt aus der Gruppe bestehend aus: 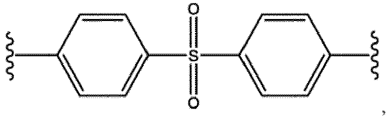 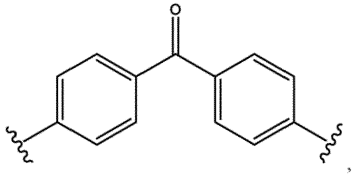 et 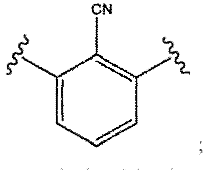 **D** ist gewählt aus der Gruppe bestehend aus: 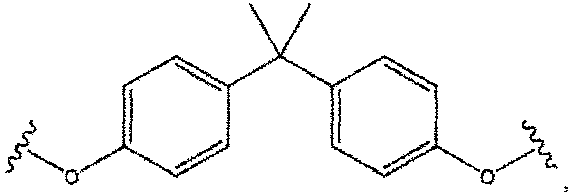 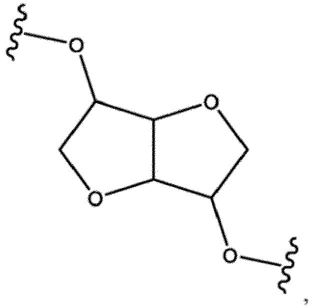 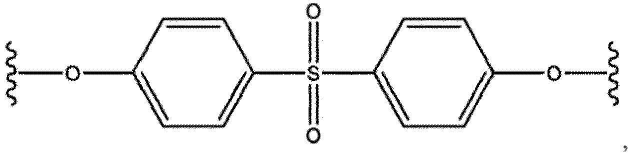 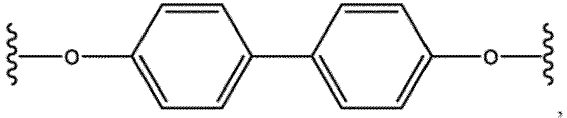 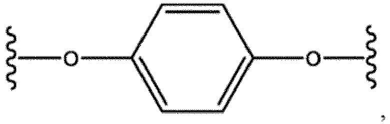 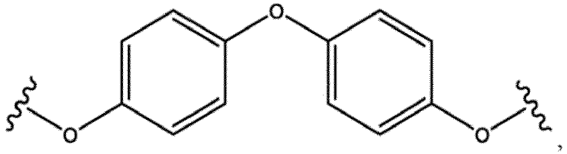 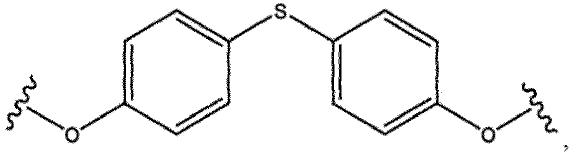 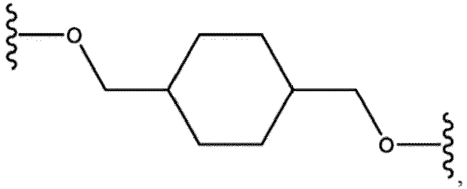 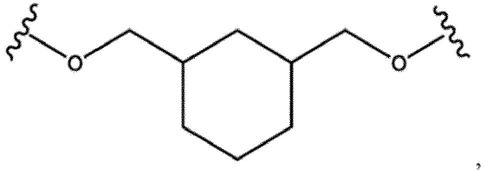 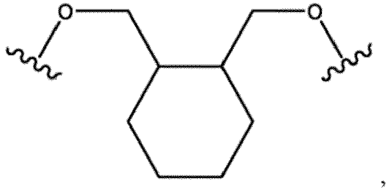 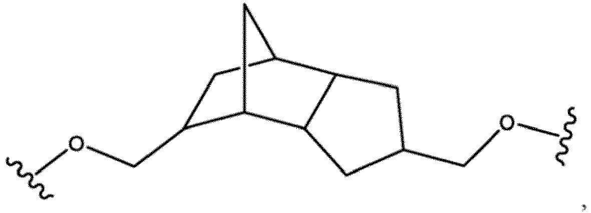 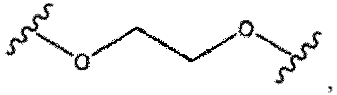 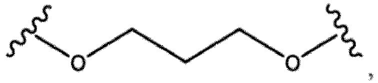 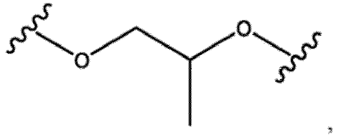 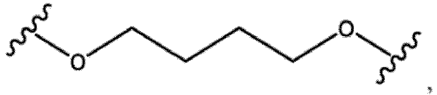 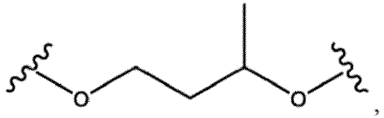 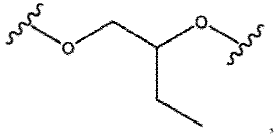 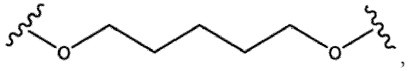 et 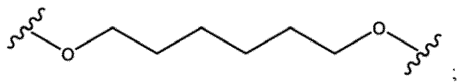
- **X** ist ein Halogen,
- **m** ist eine ganze Zahl größer 1,
- **n** ist 0 oder eine ganze Zahl größer 1,
- das Verhältnis **m/n** liegt zwischen 100/0 und 1/99,
- **p** ist eine ganze Zahl größer 1.

2. Polymer der Formel **(I)** nach Anspruch 1 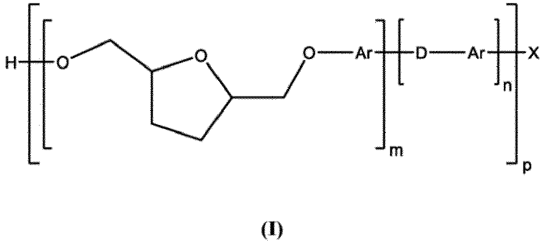 wobei gilt:
- das Verhältnis **m/n** liegt zwischen 100/0 und 1/99, bevorzugt zwischen 100/0 und 10/90,
- **p** ist eine ganze Zahl größer 1,
- **Ar** ist gewählt aus der Gruppe bestehend aus: 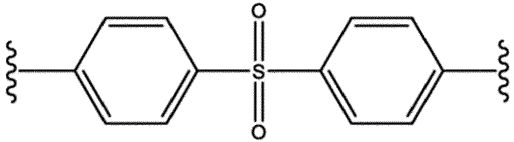 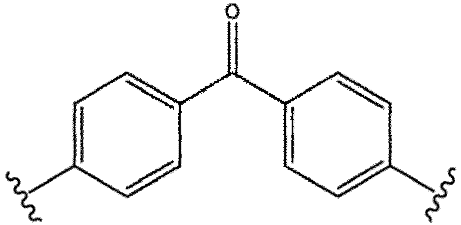 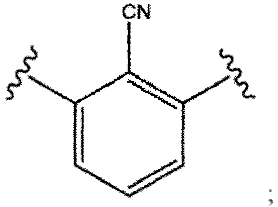
- **D** ist gewählt aus der Gruppe bestehend aus: 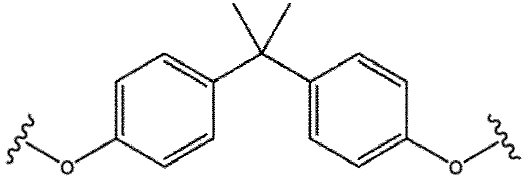 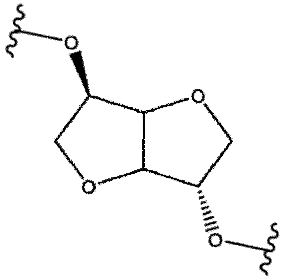 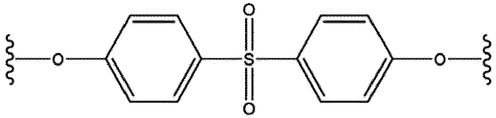 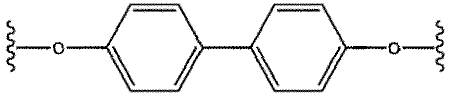
- **X** ist ein Halogen, bevorzugt ist **X** gewählt aus Fluor und Chlor, weiter bevorzugt ist **X** Fluor.

3. Polymere der Formel **(II)** nach Anspruch 1
wobei gilt: 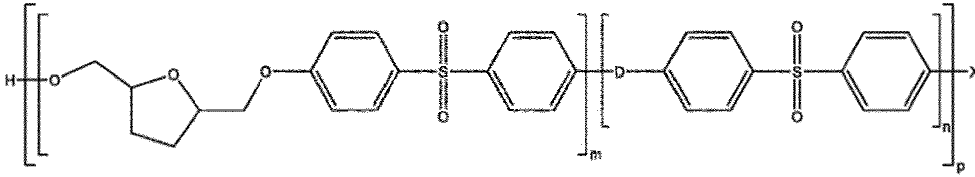
- das Verhältnis **m/n** liegt zwischen 100/0 und 1/99, bevorzugt zwischen 100/0 und 10/90,
- **p** ist eine ganze Zahl größer 1,
- **D** ist gewählt aus der Gruppe bestehend aus: 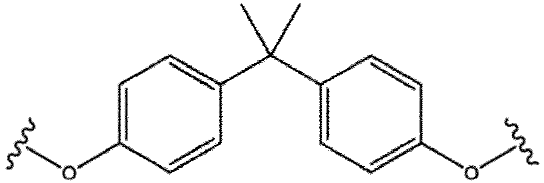 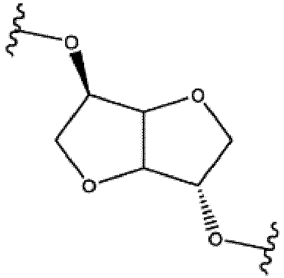 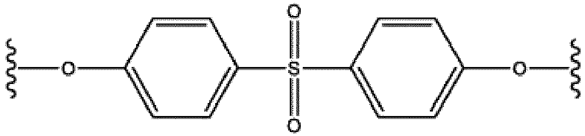 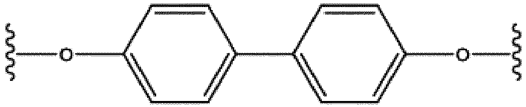
- **X** ist ein Halogen, bevorzugt ist **X** aus Fluor und Chlor gewählt, weiter bevorzugt ist **X** Fluor.

4. Polymer der Formel **(III)** nach Anspruch 1 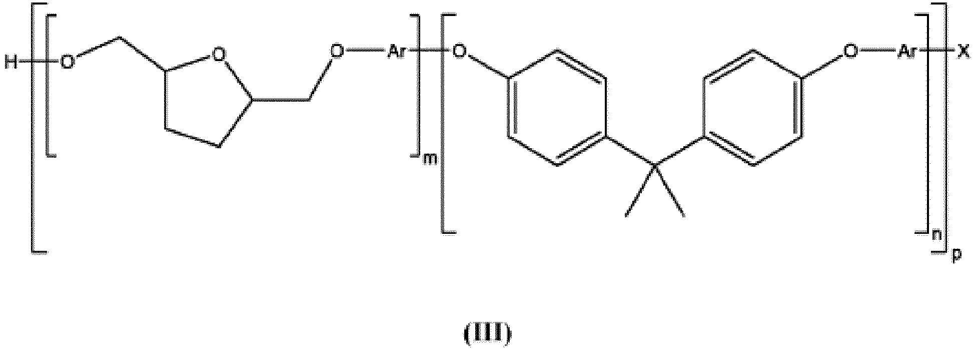 wobei gilt:
- **m** ist eine ganze Zahl größer 1,
- n ist 0 oder eine ganze Zahl größer 1,
- das Verhältnis **m/n** liegt zwischen 100/0 und 1/99, bevorzugt zwischen 100/0 und 10/90,
- p ist eine ganze Zahl größer 1,
- **Ar** ist gewählt aus der Gruppe bestehend aus: 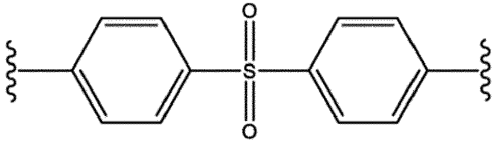 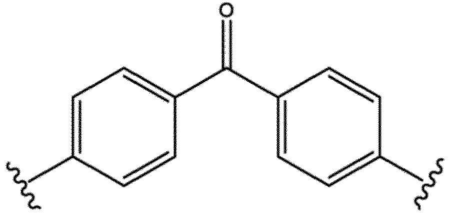 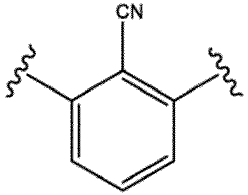
- **X** ist ein Halogen, bevorzugt ist **X** aus Fluor und Chlor gewählt, weiter bevorzugt ist **X** Fluor.

5. Polymer der Formel **(IV)** nach Anspruch 1 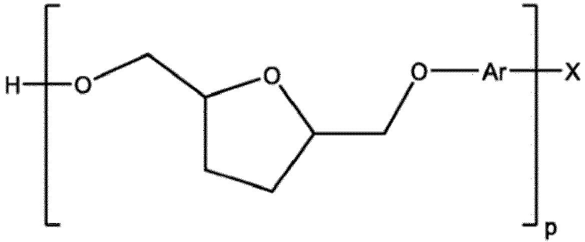 wobei gilt:
- **p** ist eine ganze Zahl größer 1,
- **Ar** ist gewählt aus der Gruppe bestehend aus: 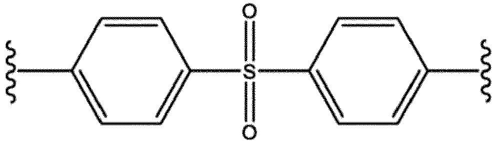 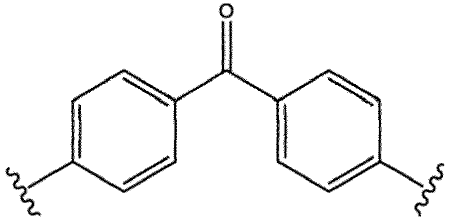 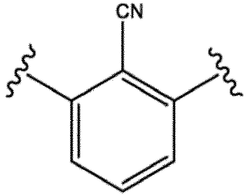
- **X** ist ein Halogen, bevorzugt ist **X** aus Fluor und Chlor gewählt, weiter bevorzugt ist **X** Fluor.

6. Polymer der Formel (**V**) nach Anspruch 1 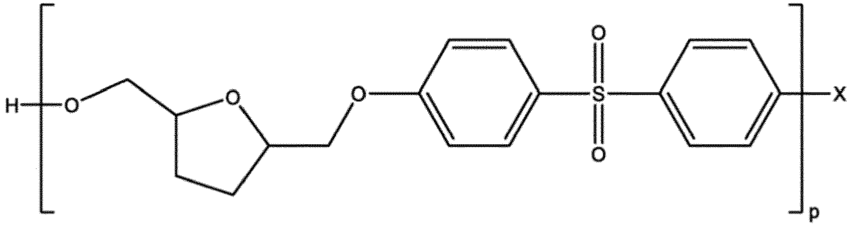 wobei gilt:
- **p** ist eine ganze Zahl größer 1,
- **X** ist ein Halogen, bevorzugt ist **X** gewählt aus Fluor und Chlor, weiter bevorzugt ist **X** Fluor.

7. Verfahren zur Herstellung eines Polymers, welches die Wiederholungseinheit(en) der Formel **(I)** enthält: 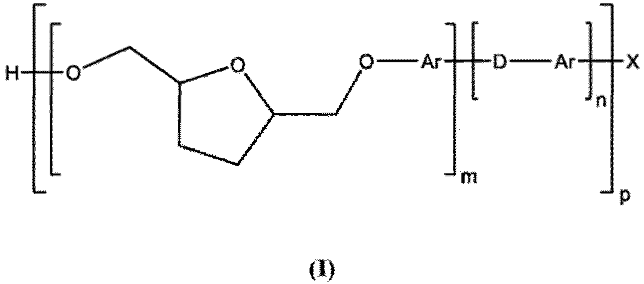 wobei gilt:
- m ist eine ganze Zahl größer 1,
- **n** ist 0 oder eine ganze Zahl größer 1,
- das Verhältnis **m/n** liegt im Bereich von 100/0 bis 1/99,
- **p** ist eine ganze Zahl größer 1,
- **Ar** ist gewählt aus der Gruppe bestehend aus: 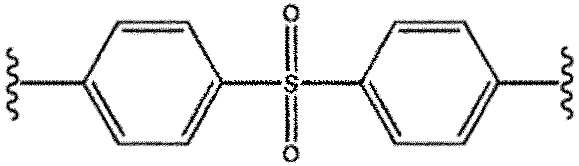 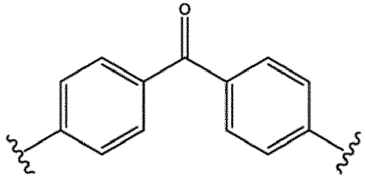 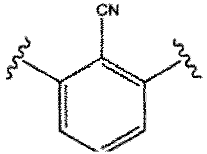
- **D** ist gewählt aus der Gruppe bestehend aus: 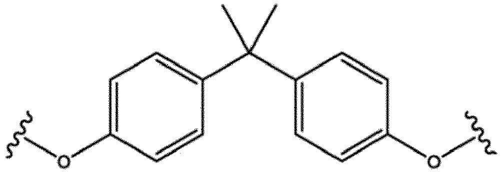 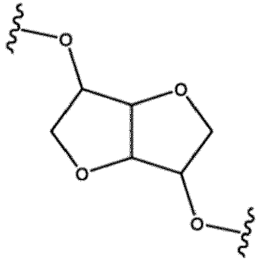 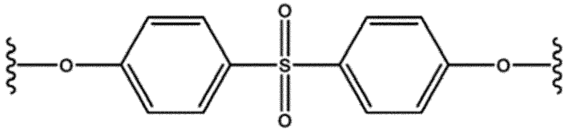 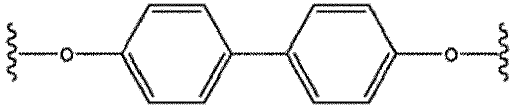 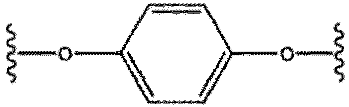 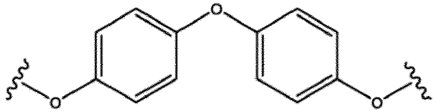 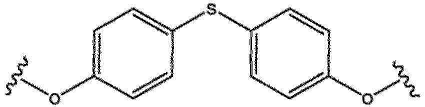 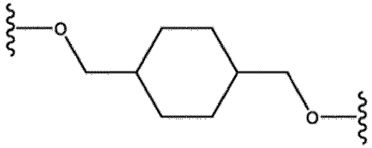 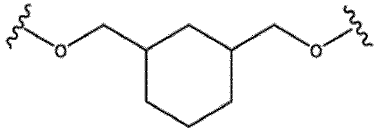 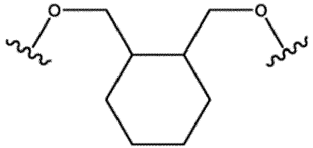 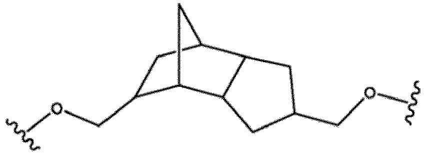 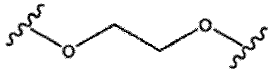 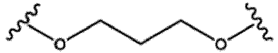 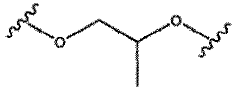 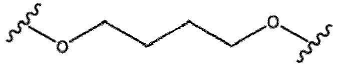 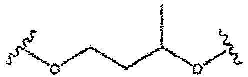 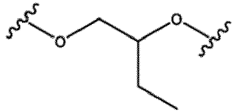 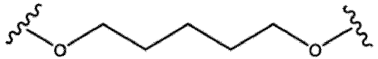 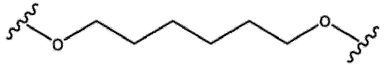
- **X** ist ein Halogen, bevorzugt ist **X** aus Fluor und Chlor gewählt, weiter bevorzugt ist **X** Fluor
und umfasst einen Schritt der Reaktion zwischen Tetrahydrofurandimethanol, optional in Gegenwart einer Verbindung der Formel HO-**D**-OH, mit einer aromatischen Dihalogenverbindung der Formel X-**Ar**-X in Gegenwart einer Base in einem organischen Lösungsmittel.

8. Verfahren nach Anspruch 7, **dadurch gekennzeichnet, dass** das Molverhältnis von Tetrahydrofurandimethanol/Co-Diol im Bereich von 100/0 bis 1/99 liegt.

9. Verfahren nach Anspruch 7 oder 8, **dadurch gekennzeichnet, dass** die Base aus den Alkalimetallsalzen gewählt wird.

10. Verfahren nach einem der Ansprüche 7 bis 9, **dadurch gekennzeichnet, dass** das organische Lösungsmittel aus den polaren aprotischen Lösungsmitteln gewählt wird.

11. Verfahren nach einem der Ansprüche 7 bis 10, **dadurch gekennzeichnet, dass** der Anteil an Monomeren zwischen 10 und 50 Massenprozent liegt, bezogen auf die Summe der Masse des Lösungsmittels und der Masse der Monomere.

12. Verfahren nach einem der Ansprüche 7 bis 11, **dadurch gekennzeichnet, dass** die Reaktion zwischen Tetrahydrofurandimethanol, wahlweise in Gegenwart eines Co-Diols, mit einer aromatischen Dihalogenverbindung bei einer Temperatur zwischen 160 °C und 240 °C durchgeführt wird.

13. Verwendung eines Polymers nach einem der Ansprüche 1 bis 6 zur Herstellung von Membranen für Fertigteile und Beschichtungen.

## Claims

1. An aromatic polyether type polymer of formula I comprising a repeating unit formed from a furanic bio-based diol and an aromatic compound X-**Ar**-X, and optionally a second repeating unit formed from a co-diol HO-D-OH and an aromatic compound X-**Ar**-X: 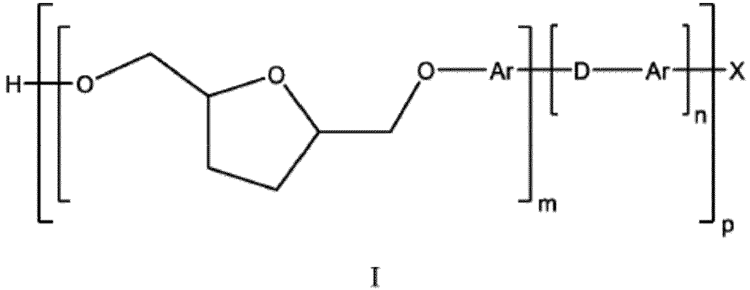 wherein
**Ar** is selected from the group consisting of: 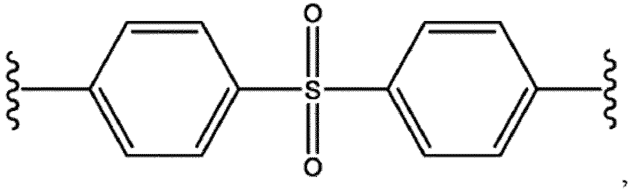 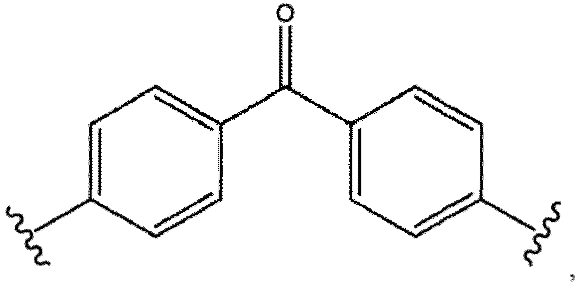 and 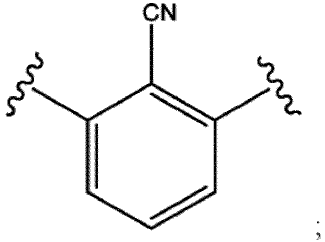 **D** is selected from the group consisting of: 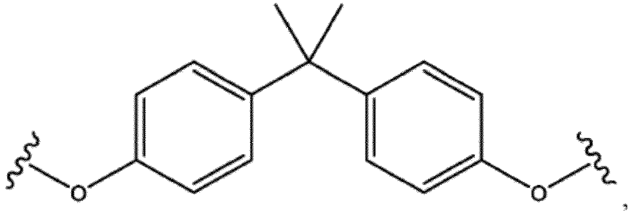 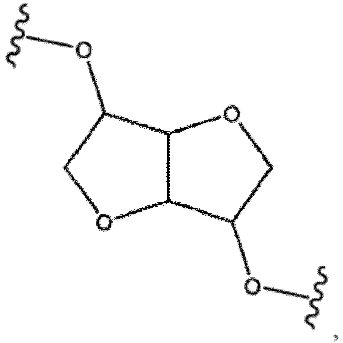 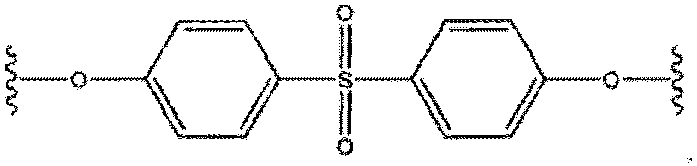 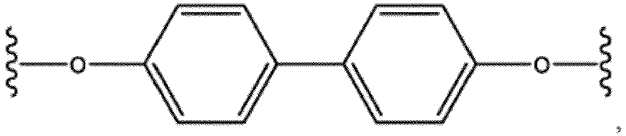 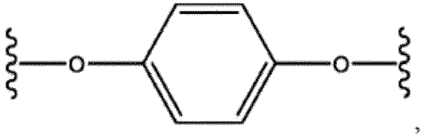 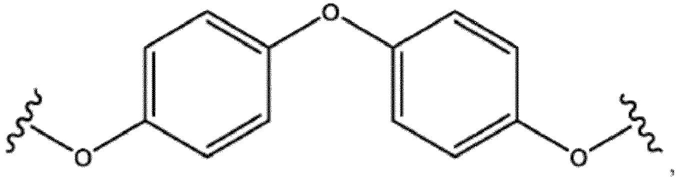 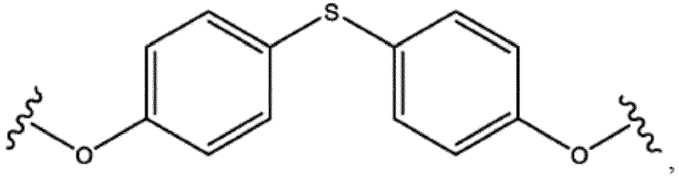 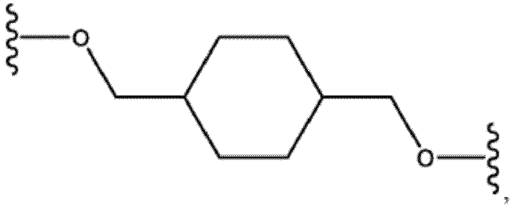 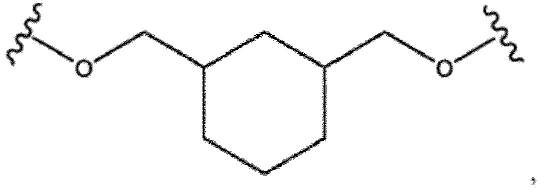 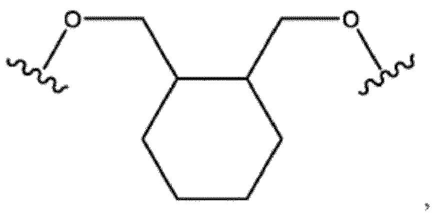 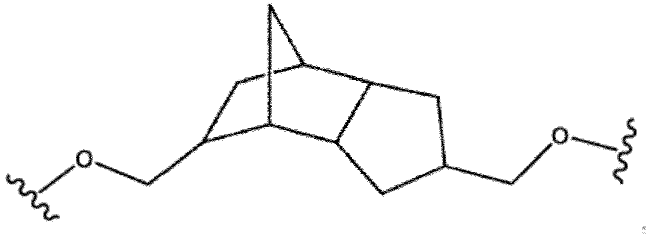 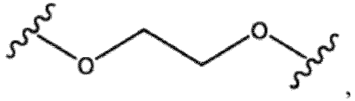 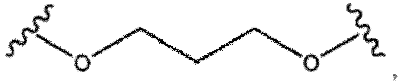 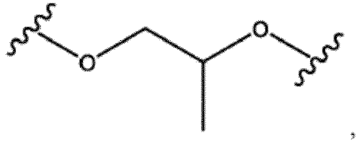 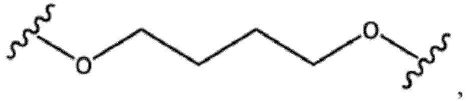 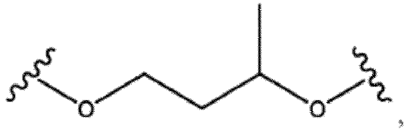 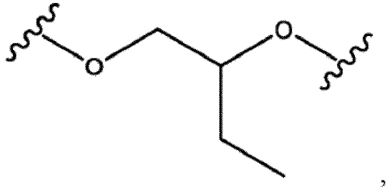 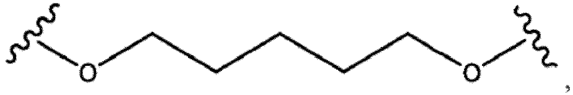 and 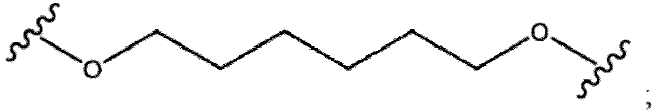
- **X** is a halogen
- **m** is an integer which is greater than 1
- **n** is 0 or an integer which is greater than 1
- the ratio **m/n** is comprised between 100/0 and 1/99
- **p** is an integer which is greater than 1

2. The polymer of formula (**I**) according to claim 1 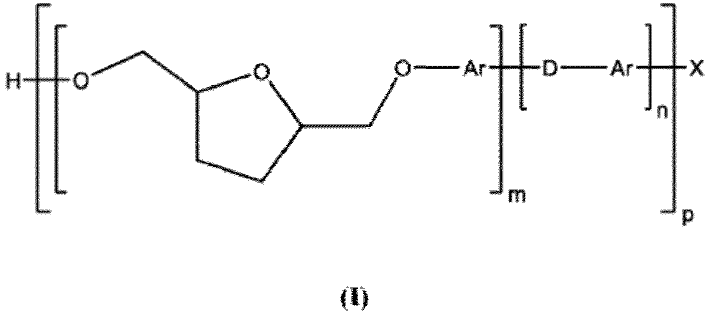 wherein
- the ratio **m/n** is comprised between 100/0 and 1/99, preferably between 100/0 and 10/90
- **p** is an integer which is greater than 1
- **Ar** is selected from the group consisting of: 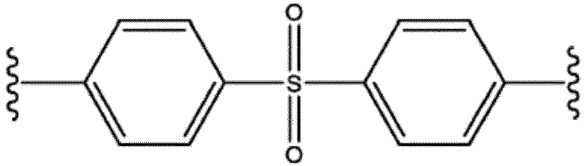 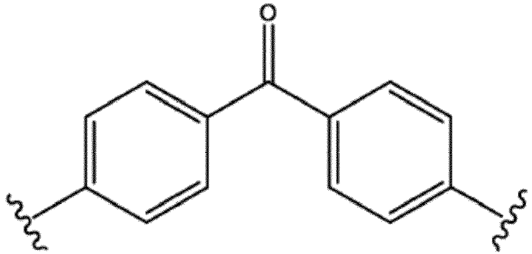 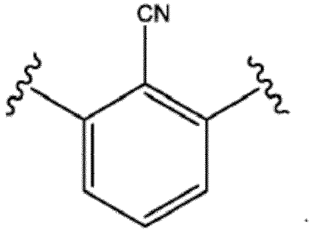
- D is selected from the group consisting of: 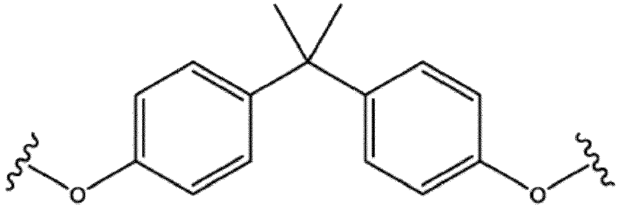 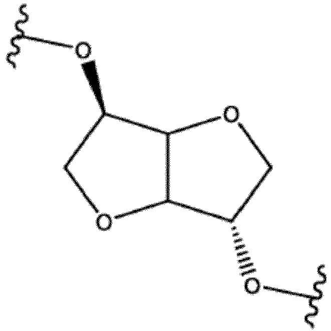 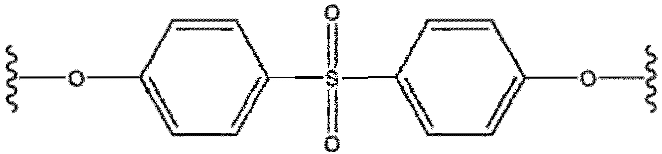 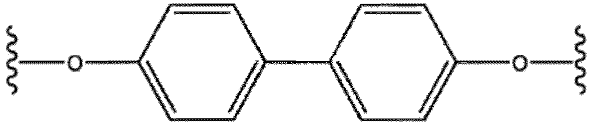
- **X** is a halogen, preferably **X** is selected from fluorine and chlorine, more preferably **X** is fluorine.

3. The polymer of formula (**II**) according to claim 1 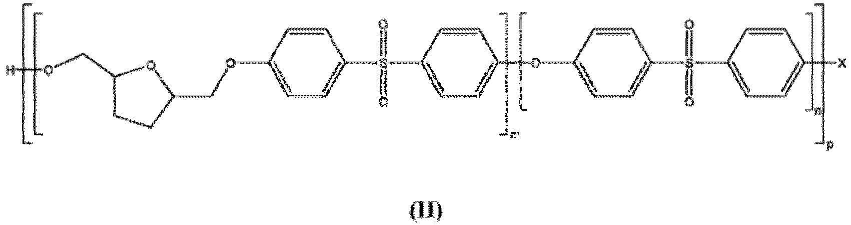 wherein
- the ratio **m/n** is comprised between 100/0 and 1/99, preferably between 100/0 and 10/90
- **p** is an integer which is greater than 1
- **D** is selected from the group consisting of: 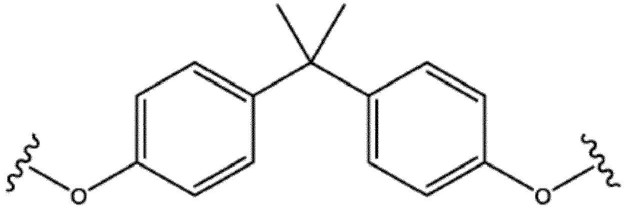 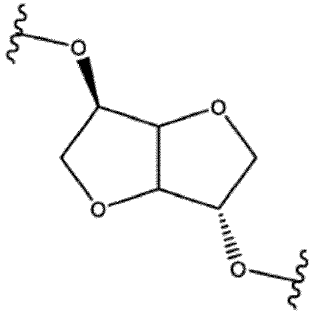 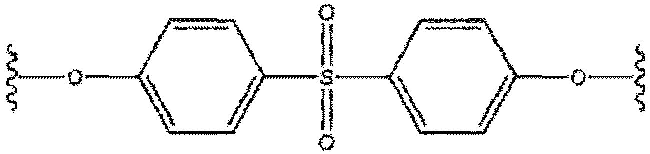 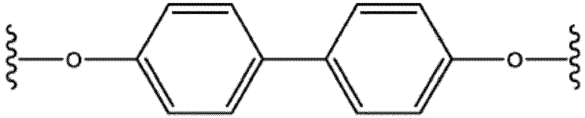
- **X** is a halogen, preferably **X** is selected from fluorine and chlorine, more preferably **X** is fluorine.

4. The polymer of formula (**III**) according to claim 1 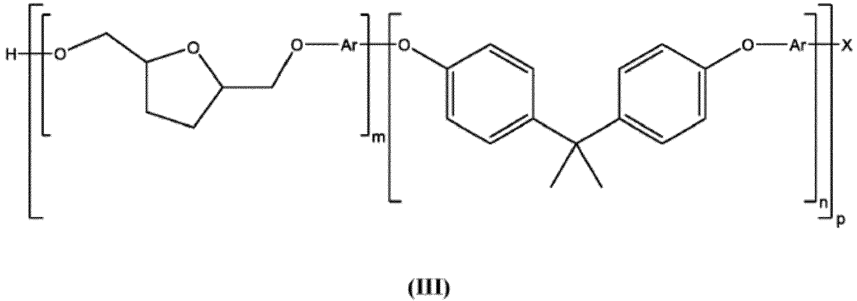 wherein
- **m** is an integer which is greater than 1
- **n** is 0 or an integer which is greater than 1
- the ratio **m/n** is comprised between 100/0 and 1/99, preferably between 100/0 and 10/90
- **p** is an integer which is greater than 1
- **Ar** is selected from the group consisting of: 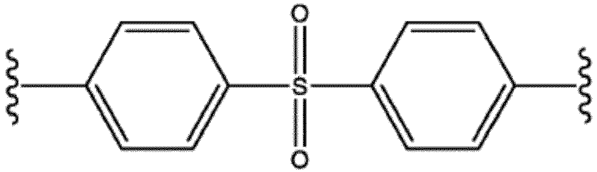 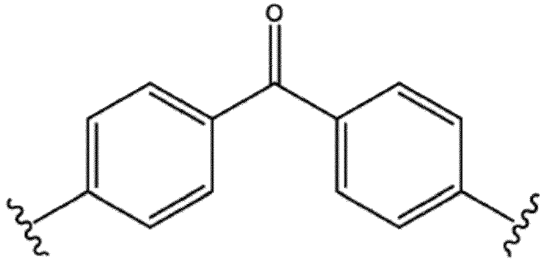 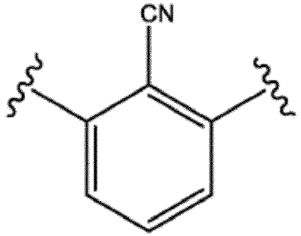
- **X** is a halogen, preferably **X** is selected from fluorine and chlorine, more preferably **X** is fluorine.

5. The polymer of formula (**IV**) according to claim 1 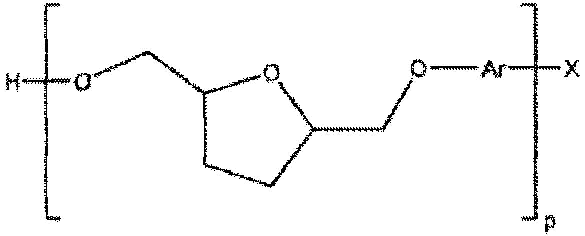 wherein
- **p** is an integer which is greater than 1
- **Ar** is selected from the group consisting of: 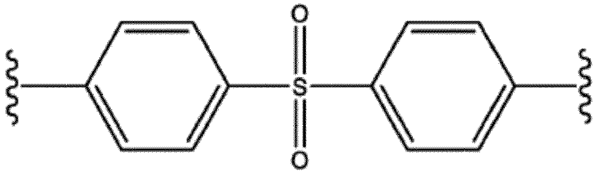 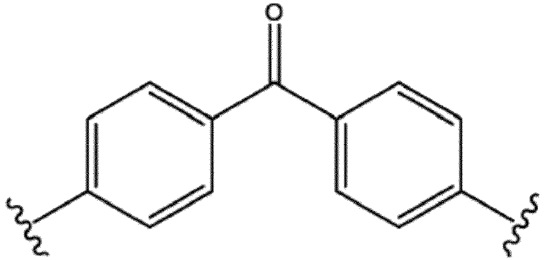 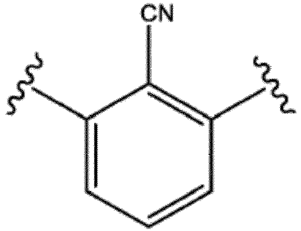
- **X** is a halogen, preferably **X** is selected from fluorine and chlorine, more preferably **X** is fluorine.

6. The polymer of formula (**V**) according to claim 1 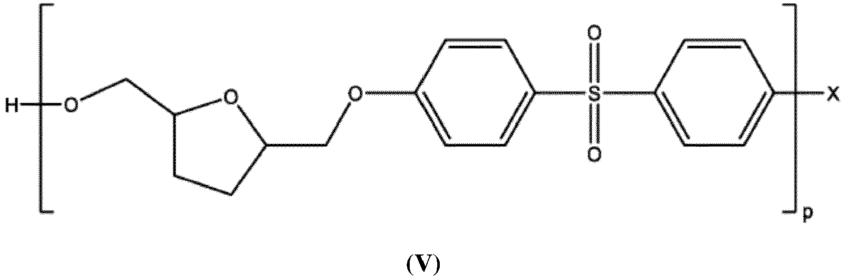 wherein
- **p** is an integer which is greater than 1
- **X** is a halogen, preferably **X** is selected from fluorine and chlorine, more preferably **X** is fluorine.

7. A method for preparing a polymer comprising the repeating unit(s) of formula (**I**) 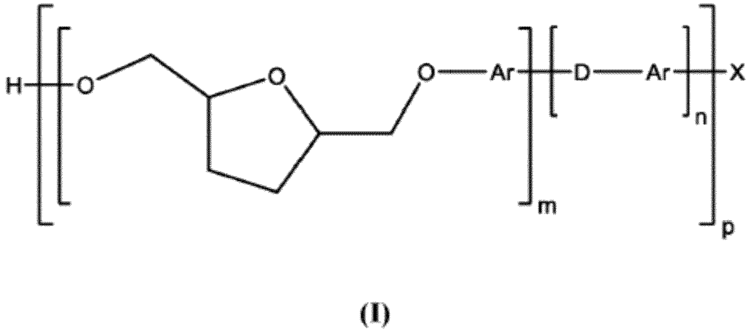 wherein
- **m** is an integer which is greater than 1
- **n** is 0 or an integer which is greater than 1
- the ratio **m/n** is comprised between 100/0 and 1/99
- **p** is an integer which is greater than 1
- **Ar** is selected from the group consisting of: 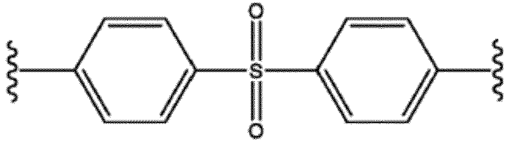 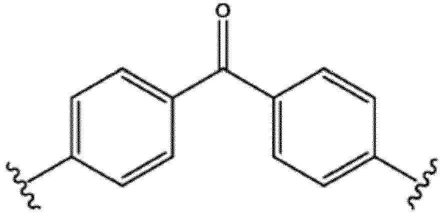 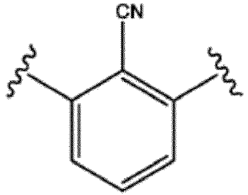
- **D** is selected from the group consisting of: 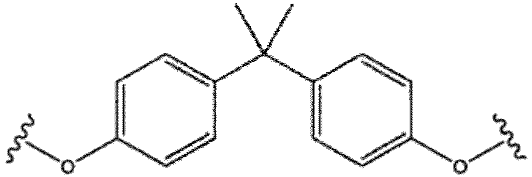 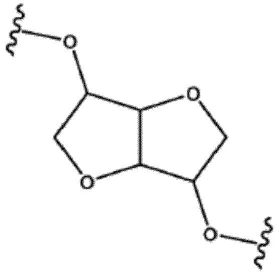 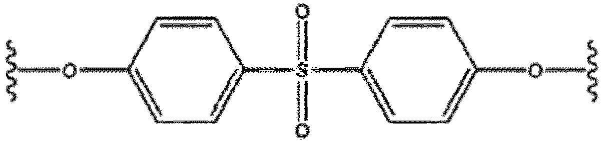 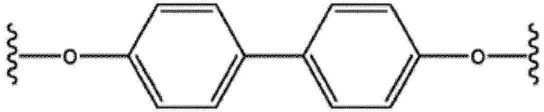 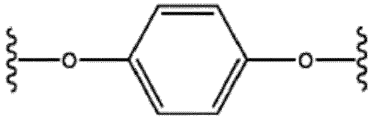 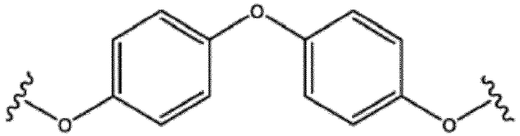 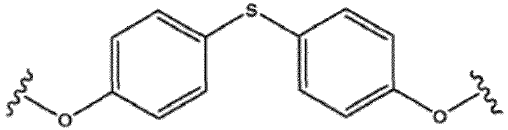 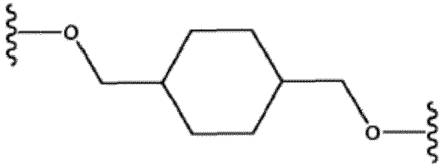 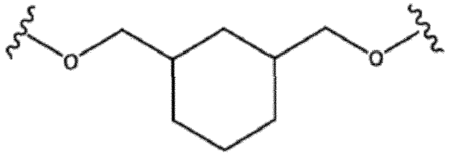 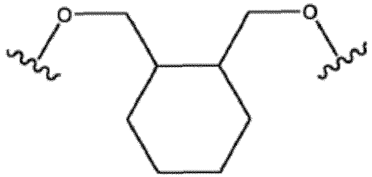 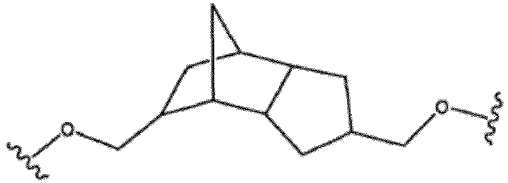 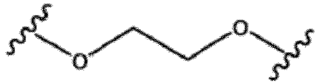 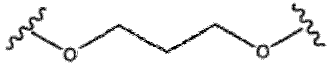 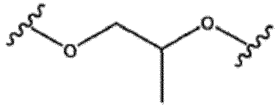 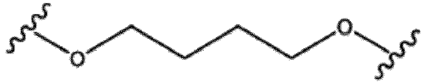 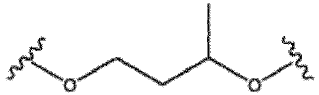 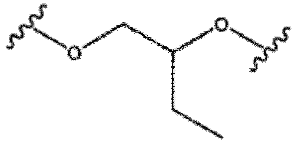 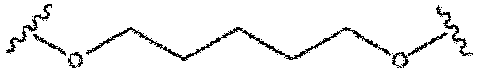 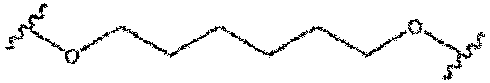
- **X** is a halogen, preferably **X** is selected from fluorine and chlorine, more preferably **X** is fluorine.
and comprises a step of reaction between tetrahydrofuran dimethanol, optionally in the presence of a compound of formula HO-**D**-OH, with a dihalogenated aromatic compound of formula X-**Ar**-X, in the presence of a base in an organic solvent.

8. The method according to claim 7, **characterised in that** the tetrahydrofuran dimethanol/co-diol molar ratio is comprised between 100/0 and 1/99.

9. The method according to claim 7 or 8, **characterised in that** the base is selected from the alkali metal salts.

10. The method according to any one of claims 7 to 9, **characterised in that** the organic solvent is selected from the aprotic polar solvents.

11. The method according to any one of claims 7 to 10, **characterised in that** the proportion of monomers is comprised between 10% and 50% by mass relative to the sum of the mass of the solvent and the mass of the monomers.

12. The method according to any one of claims 7 to 11, **characterised in that** the reaction between tetrahydrofuran dimethanol, optionally in the presence of a co-diol, with a dihalogenated aromatic compound is carried out at a temperature comprised between 160°C and 240°C.

13. A use of a polymer according to one of claims 1 to 6, for manufacturing membranes of manufactured parts and coatings.
